(19) Europäisches Patentamt
European Patent Office
Office européen des brevets

(11) **EP 2 674 464 A1**

(12) **EUROPEAN PATENT APPLICATION**
published in accordance with Art. 153(4) EPC

(43) Date of publication:
**18.12.2013 Bulletin 2013/51**

(51) Int Cl.:
***C09J 7/00*** (2006.01)   ***C09J 7/02*** (2006.01)
***C09J 11/04*** (2006.01)   ***C09J 133/04*** (2006.01)

(21) Application number: **12744721.7**

(22) Date of filing: **31.01.2012**

(86) International application number:
**PCT/JP2012/052049**

(87) International publication number:
**WO 2012/108289 (16.08.2012 Gazette 2012/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2011   JP 2011028008**
**12.08.2011   JP 2011176787**

(71) Applicant: **Nitto Denko Corporation**
**Osaka 567-8680 (JP)**

(72) Inventors:
• **TOJO, Midori**
**Ibaraki-shi, Osaka 567-8680 (JP)**

• **NAKAYAMA, Yusuke**
**Ibaraki-shi, Osaka 567-8680 (JP)**
• **TERADA, Yoshio**
**Ibaraki-shi, Osaka 567-8680 (JP)**
• **FURUTA, Kenji**
**Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(54) **FLAME-RETARDANT THERMALLY-CONDUCTIVE ADHESIVE SHEET**

(57) A flame-retardant thermally-conductive pressure-sensitive adhesive sheet includes a flame-retardant thermally-conductive pressure-sensitive adhesive layer containing at least: (a) an acrylic polymer prepared by copolymerizing a monomer component containing an alkyl (meth)acrylate as a main component, containing a polar group-containing monomer, and not substantially containing a carboxyl group-containing monomer and (b) a hydrated metal compound.

FIG. 1

**Description**

Technical Field

The present invention relates to a flame-retardant thermally-conductive pressure-sensitive adhesive sheet having both flame retardancy and thermally conductive properties.

Background Art

By allowing an acrylic pressure-sensitive adhesive composition to contain a thermally conductive filler, conventionally, its thermally conductive properties have been improved as compared to those of a pressure-sensitive adhesive, which serves as a base. In Patent Document 1, for example, it has been disclosed that by using boron nitride particles each having a specific particle size and an acrylic polymer component, a high adhesive force (pressure-sensitive adhesive force) is capable of being imparted to a thermally-conductive pressure-sensitive adhesive sheet.

The thermally-conductive pressure-sensitive adhesive sheet has been widely used for uses of electronic components such as an encapsulation of a chip component or a formation of an insulating layer between a circuit mounted with a heat generating component and a heat dissipating board. The thermally-conductive pressure-sensitive adhesive sheet to be used is required to have high flame retardancy, in addition to adhesive properties such as thermally conductive properties, adhesive properties, and a holding force, in order to reduce the risk of ignition due to thermal runaway of a device. In order to impart the flame retardancy to a pressure-sensitive adhesive sheet, blending of a flame retardant has been generally considered. As the flame retardant to be blended in a pressure-sensitive adhesive, a halogen-based flame retardant is generally used. However, in view of environmental protection, use of a non-halogen-based flame retardant has been variously considered. The effect of impartation of flame retardancy in the non-halogen-based flame retardant is lower than that in the halogen-based flame retardant, so that a mixing amount of the flame retardant is required to be increased in order to obtain sufficient flame retardancy. When the mixing amount of the flame retardant is increased, however, as in the case where the flame retardant is blended into a substrate, there may be a case where the properties of the pressure-sensitive adhesive change, so that the pressure-sensitive adhesive properties are reduced.

In Patent Document 2, for example, a thermally-conductive flame-retardant pressure-sensitive adhesive and a pressure-sensitive adhesive tape having electrically insulating properties have been disclosed. They are characterized by containing 50 to 250 parts by mass of a hydrated metal compound having both functions of thermally conductive particles and a non-halogen-based flame retardant with respect to 100 parts by mass of an acrylic copolymer prepared from a monomer mixture containing 0.5 to 10 parts by mass of a polar vinyl monomer such as an acrylic acid as an essential component and 100 parts by mass of a pressure-sensitive adhesive composition composed of 10 to 100 parts by mass of a tackifier resin. In this invention, a tackifier is blended in order to compensate a reduction of the adhesive force caused by blending of a large amount of hydrated metal compound, but sufficient thermally conductive properties are not capable of being obtained.

Furthermore, in Patent Document 3, for example, as a thermally-conductive flame-retardant pressure-sensitive adhesive and a sheet having thermally conductive properties and flame retardancy, a thermally-conductive flame-retardant pressure-sensitive adhesive and a sheet containing an acrylic polymer, a flame retardant that has thermally conductive properties and does not contain a halogen, and a thermally conductive filler have been disclosed. In Patent Document 3, an example is described in which an aluminum hydroxide is used as a flame retardant and an aluminum oxide is used as a thermally conductive filler. It is also described that sufficient thermally conductive properties and flame retardancy are capable of being obtained even in a small filling amount by specifying the particle size thereof. However, both the thermally conductive properties and the flame retardancy are not satisfactory.

As disclosed in Patent Documents 1 to 3, in order to satisfy the thermally conductive properties and the flame retardancy, blending of a large amount of thermally conductive particles and flame retardant has been considered. However, there is a problem that the preparation of the pressure-sensitive adhesive sheet becomes difficult by losing fluidity of a pressure-sensitive adhesive composition (a viscous liquid), and the pressure-sensitive adhesive layer is hardened, so that the adhesive performance is reduced.

Prior Art Document

Patent Document

Patent Document 1: Japanese Unexamined Patent Publication No. 2010-174173
Patent Document 2: Japanese Unexamined Patent Publication No. H11-269438

Patent Document 3: Japanese Unexamined Patent Publication No. 2002-294192

Summary of the Invention

Problems to be solved by the Invention

It is an object of the present invention to provide a flame-retardant thermally-conductive pressure-sensitive adhesive sheet having excellent thermally conductive properties, having excellent adhesive properties to an adherend and an excellent holding force, and furthermore, having high flame retardancy.

Solution to the Problems

The inventors of the present invention have earnestly considered in order to achieve the above-described objects; as a result, found that the above-described problem is capable of being solved in the following manner; and completed the present invention. That is, in a pressure-sensitive adhesive layer that is prepared from an acrylic polymer containing an alkyl (meth)acrylate as a main component, in order to impart further higher flame retardancy and thermally conductive properties thereto, a hydrated metal compound is used and in order to retain the adhesive properties without reducing the fluidity of a pressure-sensitive adhesive composition even in a large amount of addition thereto, as the acrylic polymer, an acrylic polymer that does not substantially contain a carboxyl group-containing monomer and contains another polar group-containing monomer as a component is used.

That is, the present invention provides a flame-retardant thermally-conductive pressure-sensitive adhesive sheet including a flame-retardant thermally-conductive pressure-sensitive adhesive layer containing at least: (a) an acrylic polymer prepared by copolymerizing a monomer component containing an alkyl (meth)acrylate as a main component, containing a polar group-containing monomer, and not substantially containing a carboxyl group-containing monomer and (b) a hydrated metal compound.

In the flame-retardant thermally-conductive pressure-sensitive adhesive sheet of the present invention, it is preferable that the flame-retardant thermally-conductive pressure-sensitive adhesive layer contains 100 parts by weight of the (a) an acrylic polymer and 100 to 500 parts by weight of the (b) a hydrated metal compound and it is preferable that the (a) an acrylic polymer contains, as a polar group-containing monomer, a nitrogen-containing monomer and/or a hydroxyl group-containing monomer as a component.

In the flame-retardant thermally-conductive pressure-sensitive adhesive sheet of the present invention, it is preferable that in the (b) a hydrated metal compound, a particle having a first average particle size of 10 $\mu$m or more and a particle having a first average particle size of less than 10 $\mu$m are contained at a ratio of 1:10 to 10:1 (ratio by weight).

The present invention provides the flame-retardant thermally-conductive pressure-sensitive adhesive sheet including the flame-retardant thermally-conductive pressure-sensitive adhesive layer that further contains (c) bubbles. In the present invention, it is preferable that the content of the (c) bubbles with respect to the flame-retardant thermally-conductive pressure-sensitive adhesive layer is 5 to 50 volume %.

The present invention provides the flame-retardant thermally-conductive pressure-sensitive adhesive sheet including a substrate and the flame-retardant thermally-conductive pressure-sensitive adhesive layer that is provided on at least one surface of the substrate.

In the flame-retardant thermally-conductive pressure-sensitive adhesive sheet of the present invention, it is preferable that the thermal conductivity is 0.30 W/mK or more and it is preferable that the pressure-sensitive adhesive force (a peeling angle of 180°C, a tensile rate of 300 mm/min) with respect to a SUS304 steel plate is 3 N/20 mm or more.

Effect of the Invention

According to the flame-retardant thermally-conductive pressure-sensitive adhesive sheet of the present invention, a flame-retardant thermally-conductive pressure-sensitive adhesive sheet having excellent thermally conductive properties, having excellent adhesive properties to an adherend and an excellent holding force, and furthermore, realizing high flame retardancy can be provided. Such a flame-retardant thermally-conductive pressure-sensitive adhesive sheet uses its properties and is favorably used in uses such as a hard disk, an LED lighting, or a lithium ion battery.

Brief Description of the Drawings

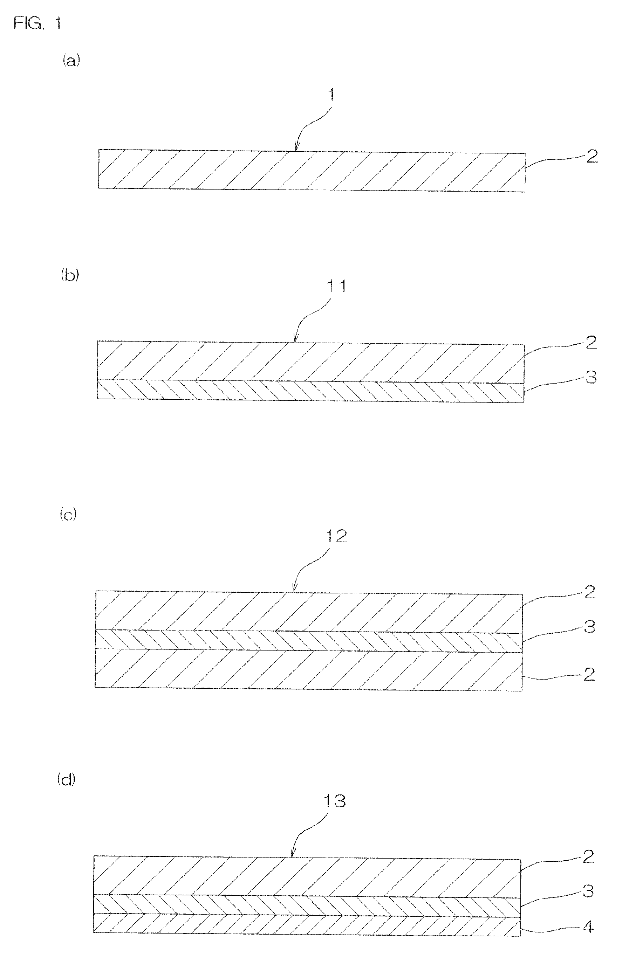

[FIG. 1] FIG. 1 shows schematic sectional views for partially illustrating an example of a flame-retardant thermally-conductive pressure-sensitive adhesive sheet of the present invention:

(a) illustrating a configuration of the flame-retardant thermally-conductive pressure-sensitive adhesive sheet that is formed of a flame-retardant thermally-conductive pressure-sensitive adhesive layer only,
(b) illustrating a configuration of forming the flame-retardant thermally-conductive pressure-sensitive adhesive layer on one surface of a substrate,
(c) illustrating a configuration of forming the flame-retardant thermally-conductive pressure-sensitive adhesive layers on both surfaces of the substrate, and
(d) illustrating a configuration of forming the flame-retardant thermally-conductive pressure-sensitive adhesive layer on one surface of the substrate and forming a non-flame retardant thermally-conductive pressure-sensitive adhesive layer on the other surface thereof.

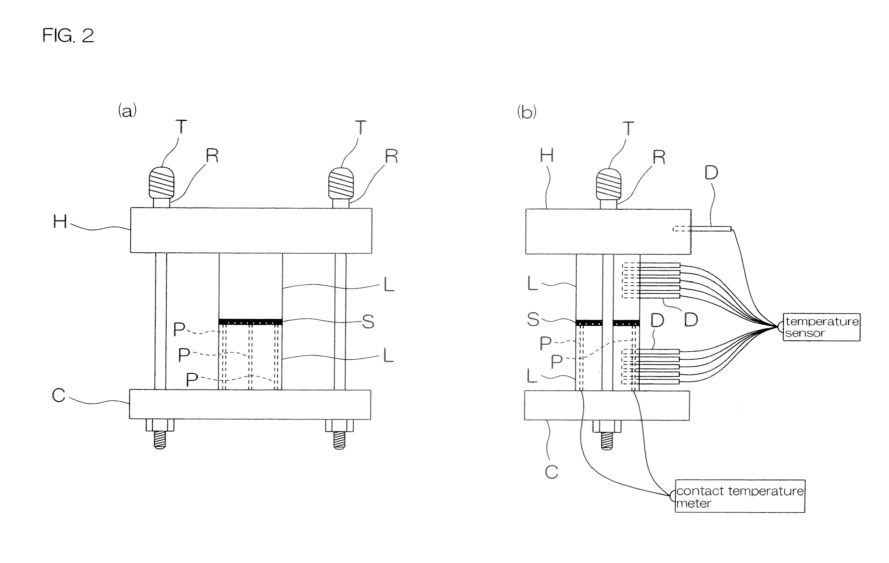

[FIG. 2] FIG. 2 shows explanatory views of a thermal property evaluation apparatus measuring the thermal conductivity and the thermal resistance in Examples:

(a) illustrating a front view and
(b) illustrating a side view.

Embodiment of the Invention

A flame-retardant thermally-conductive pressure-sensitive adhesive sheet of the present invention includes a flame-retardant thermally-conductive pressure-sensitive adhesive layer containing at least: (a) an acrylic polymer prepared by copolymerizing a monomer component containing an alkyl (meth)acrylate as a main component, containing a polar group-containing monomer, and not substantially containing a carboxyl group-containing monomer and (b) a hydrated metal compound.

(Acrylic Polymer)

As the (a) an acrylic polymer constituting the flame-retardant thermally-conductive pressure-sensitive adhesive layer, an acrylic polymer prepared by copolymerizing a monomer component containing an alkyl (meth)acrylate as a main component, containing a polar group-containing monomer, and not substantially containing a carboxyl group-containing monomer is used. These acrylic polymers can be used alone or in combination of two or more.
An example of the alkyl (meth)acrylate constituting the acrylic polymer includes a $C_{1-20}$ alkyl (meth)actylate such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrytate, undecyl (meth)acrylate, dodecyl (meth)acrylate, tridecyl (meth)acrylate, tetradecyl (meth)acrylate, pentadecyl (meth)acrylate, hexadecyl (meth) acrylate, heptadecyl (meth)acrylate, octadecyl (meth)acrylate, nonadecyl (meth)acrylate, and eicosyl (meth)acrylate.
In view of keeping well-balanced adhesive properties, in particular, preferably, a $C_{2-12}$ alkyl (meth)acrylate can be used, or more preferably, a $C_{4-9}$ alkyl (meth)acrylate can be used.
The above-described alkyl (meth)acrylate is used as the main component in the monomer component constituting the acrylic polymer. It is important that the ratio of the alkyl (meth)acrylate with respect to the total amount of the monomer component for preparing the acrylic polymer is, for example, 60 weight % or more (for example, 60 to 99 weight %), or preferably 80 weight % or more (for example, 80 to 98 weight %).
The present invention is characterized by not substantially containing a carboxyl group-containing monomer as a monomer component and the carboxyl group-containing monomer is not included in the polar group-containing monomer. The term "a carboxyl group-containing monomer" is defined as a monomer having, in a molecule, one or more carboxyl group(s) (can be in a state of anhydride). Examples thereof include a (meth)acrylic acid, an itaconic acid, a maleic acid, a fumaric acid, a crotonic acid, an isocrotonic acid, a maleic anhydride, and an itaconic anhydride. The term of a monomer component "not substantially containing" a carboxyl group-containing monomer is defined that a monomer component does not contain a carboxyl group-containing monomer at all or the content thereof with respect to the monomer component is 0.1 weight % or less.
In the present invention, when a carboxyl group-containing monomer is contained in an acrylic polymer, a reduction in the adhesive properties occurs. Or, when it is blended with a hydrated metal compound to be described later, there may be a case where the fluidity of a pressure-sensitive adhesive composition is reduced and the preparation of the flame-retardant thermally-conductive pressure-sensitive adhesive layer becomes difficult. These causes are not sufficiently clarified. It is considered that the effect of improving the adhesive force of the carboxyl group-containing monomer as a polar group is not capable of being developed because a functional group (for example, a hydroxyl group) contained in the hydrated metal compound is reacted with a carboxyl group, so that the acrylic polymer and the hydrated metal compound are brought into a state of being bonded to each other. Also, it is considered that the acrylic polymer is brought into a pseudo cross-linked state (that is, is hardened), so that the fluidity is reduced, and the wettability is reduced, so that the adhesive properties are reduced. Thus, there is no problem that the carboxyl group-containing monomer is contained in a minimal amount. However, when the carboxyl group-containing monomer is substantially contained, a large amount of hydrated metal compound is not capable of being contained Thus, the object of the present invention of providing a flame-retardant thermally-conductive pressure-sensitive adhesive sheet having excellent thermally conductive properties, having excellent adhesive properties to an adherend and an excellent holding force, and furthermore, realizing high flame retardancy cannot be achieved

Examples of the polar group-containing monomer include a nitrogen-containing monomer, a hydroxyl group-containing monomer, a sulfonic acid group-containing monomer, and a phosphoric acid group-containing monomer These polar group-containing monomers can be used alone or in combination of two or more In the present invention, in view of obtaining high adhesive properties and a high holding force, preferably, a nitrogen-containing monomer and a hydroxyl group-containing monomer can be used

In the present invention, examples of the hydroxyl group-containing monomer include a 2-hydroxyethyl (meth) acrylate, a 3-hydroxypropyl (meth)acrylate, a 4-hydroxybutyl (meth)acrylate (4HBA/4HBM), a 6-hydroxyhexyl (meth) acrylate, an 8-hydroxyoctyl (meth)acrylate, a 10-hydroxydecyl (meth)acrylate, a 12-hydroxylautyl (meth)acrylate, and a (4-hydroxymethylcyclohexyl) methyl methacrylate Of the hydroxyl group-containing monomers, m view of excellent wettability to an adherend, preferably, a hydroxyethyl (meth)acrylate and a hydroxybutyl (meth)acrylate can be used

In the present invention, examples of the nitrogen-containing monomer include an N-hydroxyalkyl (meth)acrylamide such as N-(2-hydroxyethyl) (meth)acrylamide, N-(2-hydroxypropyl) (meth)acrylamide, N-(1-hydroxypropyl) (meth)acrylamide, N-(3-hydroxypropyl) (meth)acrylamide, N-(2-hydroxybuyl) (meth)acrylamide, N-(3-hydroxybutyl) (meth)acrylamide, and N-(4-hydroxybutyl) (meth)acrylamide; a cyclic (meth)acrylamide such as N-(meth)acryloylmorpholine and N-acryloylpyrrolidine, an acyclic (meth)acrylamide such as (meth)acrylamide and N-substituted (meth)acrylamide (for example, N-alkyl (meth)acrylamide such as N-ethyl (meth)acrylamide and N-n-butyl (meth)acrylamide and N,N-dialkyl (meth)acrylamide such as N,N-dimethyl (meth)acrylamide, N,N-diethyl (meth)acrylamide (DEAA/DEMA), N,N-dipropyl (meth)acrylamide, N,N-diisopropyl (meth)acrylamide, N,N-di(n-butyl) (meth)acrylamide, and N,N-di(t-butyl) (meth)acrylamide), an N-vinyl cyclic amide such as N-vinyl-2-pyrrolidone (NVP), N-vinyl-2-piperidone, N-vinyl-3-morpholinone, N-vinyl-2-caprolactam, N-vinyl-1,3-oxazine-2-one, and N-vinyl-3,5-morpholinedione, an amino group-containing monomer such as aminoethyl (meth)acrylate, N,N-dimethylaminoethyl (meth)acrylate, and N,N-dimethylaminopropyl (meth)acrylate, a maleimide skeleton-containing monomer such as N-cyclohexylmaleimide and N-phenylmaleimide, and an itaconimide-based monomer such as N-methylitaconimide, N-ethylitaconimide, N-butylitaconimide, N-2-ethylhexylitaconimide, N-laurylitaconimide, and N-cyclohexylitaconimide

Of the nitrogen-containing monomers, in view of excellent adhesive properties at the time of initial bonding, preferably, N-vinyl-2-pyrrolidone, N-(meth)acryloylmorpholine (ACMO/MCMO), and N,N-diethyl (meth)acrylamide can be used

In the present invention, examples of the sulfonic acid group-containing monomer include a styrene sulfonic acid, an allyl sulfonic acid, a 2-(meth)acrylamide-2-methylpropanesulfonic acid, a (meth)acrylamide propanesulfonic acid, a sulfopropyl (meth)acrylate, and a (meth)acryloyloxy naphthalene sulfonic acid In the present invention, an example of the phosphoric acid group-containing monomer includes a 2-hydroxyethyl acryloyl phosphate

The mixing ratio of the polar group-containing monomer with respect to the total amount of the monomer component for preparing the acrylic polymer is, for example, 0 1 weight % or more, preferably 0.5 weight % or more, further preferably 1 weight % or more, further 2 weight % or more, further 3 weight % or more, or further more preferably 5 weight % or more The mixing ratio of the polar group-containing monomer with respect to the total amount of the monomer component for preparing the acrylic polymer is, for example, 40 weight % or less, preferably 30 weight % or less, further preferably 25 weight % or less, or particularly preferably 20 weight % or less

When the mixing ratio of the polar group-containing monomer is below the above-described lower limit, there may be a case where a cohesive force of the flame-retardant thermally-conductive pressure-sensitive adhesive layer is reduced and a high holding force is not capable of being obtained. On the other hand, when the mixing ratio of the polar group-containing monomer is above the above-described upper limit, there may be a case where the cohesive force of the flame-retardant thermally-conductive pressure-sensitive adhesive layer is excessively increased, so that the adhesive properties are reduced.

In the present invention, a polyfunctional monomer can be used as a monomer component as required. By using the polyfunctional monomer, a cross-linking structure can be introduced into the acrylic polymer, so that the cohesive force required as the flame-retardant thermally-conductive pressure-sensitive adhesive layer can be adjusted.

Examples of the polyfunctional monomer include a hexanediol (meth)acrylate, a (poly)ethylene glycol di(meth)acrylate, a (poly)propylene glycol di(meth)acrylate, a neopentyl glycol di(meth)acrylate, a pentaerythritol di(meth)acrylate, a pentaerythritol tri(meth)acrylate, a dipentaerythritol hexa(meth)acrylate, a trimethylolpropane tri(meth)acrylate, a tetramethylolmethane tri(meth)acrylate, an allyl (meth)acrylate, a vinyl (meth)acrylate, divinylbenzene, an epoxy acrylate, a polyester acrylate, a urethane acrylate, a dibutyl (meth)acrylate, and a hexydyl (meth)acrylate. These polyfunctional monomers can be used alone or in combination of two or more.

In the present invention, the mixing ratio of the polyfunctional monomer with respect to the total amount of the monomer component for preparing the acrylic polymer is preferably 2 weight % or less, for example, 0.01 to 2 weight %, or more preferably 0.02 to 1 weight %. When the used amount of the polyfunctional monomer with respect to the total amount of the monomer component for preparing the acrylic polymer is above 2 weight %, there may be a case where the cohesive force of the flame-retardant thermally-conductive pressure-sensitive adhesive layer is excessively increased, so that the adhesive properties are reduced. When the used amount of the polyfunctional monomer with respect to the total amount of the monomer component for preparing the acrylic polymer is less than 0.01 weight %, the cohesive force of the flame-retardant thermally-conductive pressure-sensitive adhesive layer may be reduced.

As the (a) an acrylic polymer in the present invention, another monomer can be also used as the monomer component as required. By using another monomer, for example, various properties of the pressure-sensitive adhesive and the structure of the acrylic polymer are capable of being further appropriately controlled.

Examples of another monomer capable of being used in the present invention include an epoxy group-containing monomer such as glycidyl (meth)acrylate and allyl glycidyl ether; an alkoxy group-containing monomer such as 2-methoxyethyl (meth)acrylate, 3-methoxypropyl (meth)acrylate, methoxyethylene glycol (meth)acrylate, and methoxypolypropylene glycol (meth)acrylate; a cyano group-containing monomer such as acrylonitrile and methacrylonitrile; a styrene-based monomer such as styrene and α-methylstyrene; an α-oletin such as ethylene, propylene, isoprene, butadiene, and isobutylene; an isocyanate group-containing monomer such as 2-isocyanate ethyl acrylate and 2-isocyanate ethyl methacrylate; a vinyl ester-based monomer such as vinyl acetate and vinyl propionate; a vinyl ether-based monomer such as vinyl ether; heterocycle-containing (meth)acrylate ester such as tetrahydroflufuryl (meth)acrylate; a halogen atom-containing monomer such as fluorine (meth)acrylate; an alkoxysilyl group-containing monomer such as 3-methacryloxypropyl trimethoxysilane and vinyltrimethoxysilane; a siloxane bond-containing monomer such as silicone (meth) acrylate; alkyl (meth)acrylate containing an alkyl group having 21 or more hydrocarbon atoms; an alicyclic hydrocarbon group-containing (meth)acrylate such as cyclopentyl (meth)acrylate, cyclohexyl (meth)acrylate, bornyl (meth)acrylate, and isobornyl (meth)acrylate; and an aromatic hydrocarbon group-containing (meth)acrylate such as phenyl (meth) acrylate, benzyl (meth)acrylate, phenoxyethyl (meth)acrylate, and phenoxydiethylene glycol (meth)acrylate. These other monomers can be used alone or in combination of two or more.

In the present invention, of the monomers, preferably, an alkoxy group-containing monomer is used, or particularly preferably, 2-methoxyethyl acrylate is used. By using the alkoxy group-containing monomers in combination, the wettability of the flame-retardant thermally-conductive pressure-sensitive adhesive layer can be improved and heat from an adherend (a source of heat) can be efficiently conducted.

In the present invention, appropriately, the mixing ratio of another monomer with respect to the total amount of the monomer component for preparing the acrylic polymer is 30 weight % or less, or preferably 20 weight % or less. The monomer component that does not substantially contain another monomer may be also used. When the alkoxy group-containing monomer is used, the mixing ratio thereof with respect to the total amount of the monomer component for preparing the acrylic polymer can be, for example, 5 weight % or more (for example, 5 to 20 weight %), or preferably 8 weight % or more (for example, 8 to 15 weight %).

In the present invention, desirably, the (a) an acrylic polymer has a glass transition temperature (Tg) of about -10°C or less (typically, about -10°C to -70°C), or preferably -20°C or less (typically, about -20°C to -70°C). That is, preferably, the composition and the mixing amount of the monomer component is adjusted so that the Tg of the acrylic polymer obtained by polymerizing the monomer component is within the above-described range. The Tg of the acrylic polymer refers to a value obtained by the formula of Fox based on the Tg of a homopolymer of each of the monomers constituting the monomer component and the weight fraction (copolymer composition) of the monomer. The value of the Tg of the homopolymer can be obtained by various known materials ("Handbook of Pressure-Sensitive Adhesive Technology" from NIKKAN KOGYO SHINBUN, LTD. or the like).

In the present invention, in the preparation of the acrylic polymer, the acrylic polymer can be obtained by copolymerizing the monomer component. The method for copolymerization is not particularly limited and a curing reaction by heat or an ultraviolet ray using a polymerization initiator such as a thermal polymerization initiator and a photopolymerization initiator (a photoinitiator) can be used.

As the polymerization initiator, in view of advantages of being capable of shortening a polymerization duration, preferably, a photopolymerization initiator can be used. That is, preferably, using the polymerization in which the ultraviolet ray is used, the monomer component is copolymerized, so that the acrylic polymer is obtained. These polymerization initiators can be used alone or in combination of two or more.

The polymerization initiator is not particularly limited and examples thereof can include a benzoin ether-based photopolymerization initiator, an acetophenone-based photopolymerization initiator, an α-ketol-based photopolymerization initiator, an aromatic sulfonyl chloride-based photopolymerization initiator, a photo active oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator.

To be specific, examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethane-1-one, and anisole methyl ether. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxydichloroacetophenone, and 4-(t-butyl)dichloroacetophenone. Examples of the $\alpha$-ketol-based photopolymerization initiator include 2-methyl-2-hydroxypropiophenone and 1-[4-(2-hydroxyethyl)phenyl]-2-methylpropane-1-one. An example of the aromatic sulfonyl chloride-based photopolymerization initiator includes 2-naphthalenesulfonylchloride. An example of the photo active oxime-based photopolymerization initiator includes 1-phenyl-1,1-propanedione-2-(o-ethoxycarbonyl)-oxime.

An example of the benzoin-based photopolymerization initiator includes benzoin. An example of the benzyl-based photopolymerization initiator includes benzyl. Examples of the benzophenone-based photopolymerization initiator include benzophenone, benzoylbenzoic acid, 3,3'-dimethyl-4-methoxybenzophenone, polyvinylbenzophenone, and $\alpha$-hydroxycyclohexyl phenyl ketone. Examples of the ketal-based photopolymerization initiator include thioxanthone, 2-chlorothioxanthone, 2-methylthioxanthone, 2,4-dimethylthioxanthone, isopropylthioxanthone, 2,4-diisopropylthioxanthone, and decylthioxanthone.

The used amount of the photopolymerization initiator is not particularly limited. The used amount thereof with respect to 100 parts by weight of the monomer component can be selected within a range of, for example, 0.01 to 5 parts by weight, or preferably 0.05 to 3 parts by weight.

In the activation of the photopolymerization initiator, it is important to apply the ultraviolet ray to a mixture of the monomer component and the photopolymerization initiator. The irradiation energy of the ultraviolet ray and the irradiation duration thereof are not particularly limited as long as the photopolymerization initiator can be activated to generate a reaction of the monomer component.

Examples of the thermal polymerization initiator include an azo-based polymerization initiator such as 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis (2-amidinopropane) dihydrochloride, 2 2'-azobis[2-(5-methyl-2-imidazoline-2-yl)propane] dihydrochloride, 2,2'-azobis(2-methylpropioneamidine) disulfate, 2,2'-azobis(N,N'-dimethyleneisobutylamidine) hydrochloride, and 2,2'-azobis[N-(2-carboxyethyl)-2-methylpropioneamidine] hydrate; a peroxide-based polymerization initiator such as dibenzoyl peroxide, t-butyl permaleate, t-butyl hydroperoxide, and hydrogen peroxide; a persulfate such as potassium persulfate and ammonium persulfate; and a redox-based polymerization initiator such as combination of persulfate and sodium hydrogen sulfite and combination of peroxide and sodium ascorbate. The used amount of the thermal polymerization initiator is not particularly limited as long as it is within a range that can be conventionally used as a polymerization initiator. When the monomer component is polymerized by a thermal polymerization method, the monomer component and the thermal polymerization initiator are dissolved in an appropriate solvent (for example, toluene or ethyl acetate) and the resulting product can be heated at a polymerization temperature of about, for example, 20 to 100°C (typically, 40 to 80°C).

(Hydrated Metal Compound)

The (b) a hydrated metal compound constituting the flame-retardant thermally-conductive pressure-sensitive adhesive layer has a decomposition starting temperature within a range of 150 to 500°C and is a compound represented by a general formula $M_mO_n \cdot XH_2O$ (wherein M is a metal, "m" and "n" are an integer of 1 or more determined by a valence of the metal, and X is the number showing the crystal water to be contained) or a double salt containing the compound. Examples of the (b) a hydrated metal compound include an aluminum hydroxide [$Al_2O3 \cdot 3H_2O$; or $Al(OH)_3$], boehmite [$Al_2O_3 \cdot H_2O$, or $AlOOH$], a magnesium hydroxide [$MgO \cdot H_2O$; or $Mg(OH)_2$], a calcium hydroxide [$CaO \cdot H_2O$; or $Ca(OH)_2$], a zinc hydroxide [$Zn(OH)_2$], silica [$H_4SiO_4$; or $H_2SiO_3$; or $H_2Si_2O_5$], an iron hydroxide [$Fe_2O_3 \, H_2O$ or $2FeO(OH)$], a copper hydroxide [$Cu(OH)_2$], a barium hydroxide [$BaO \cdot H_2O$; or $BaO \cdot 9H_2O$], a zirconium oxide hydrate [$ZrO \cdot nH_2O$], a tin oxide hydrate [$SnO \cdot H_2O$], a basic magnesium carbonate [$3MgCO_3 \cdot Mg(OH)_2 \cdot 3H_2O$], hydrotalcite [$6MgO \cdot Al_2O_3 \cdot H_2O$], dawsonite [$Na2CO3 \cdot Al_2O_3 \cdot nH_2O$], borax [$Na_2O \cdot B_2O_5 \cdot 5H_2O$], and a zinc borate [$2ZnO \cdot 3B_2O_5 \cdot 3.5H_2O$]. These hydrated metal compounds can be used alone or in combination of two or more. Of the hydrated metal compounds, in view of high thermally conductive properties and developing high flame retardancy, particularly preferably, an aluminum hydroxide is used.

The shape of the (b) a hydrated metal compound is not particularly limited and examples of the shape thereof may include a bulk shape, a needle shape, a plate shape, or a layer shape. Examples of the bulk shape include a sphere shape, a rectangular parallelepiped shape, and a pulverized shape or a deformed shape thereof.

The particle size of the (b) a hydrated metal compound is, in the case of the hydrated metal compound in a bulk shape (a sphere shape), as the first average particle size, 0.1 to 1000 $\mu$m, preferably 1 to 100 $\mu$m, or more preferably

5 to 80 µm. When the first average particle size thereof is above 1000 µm, there is a disadvantage that the particle size of the hydrated metal compound exceeds the thickness of the flame-retardant thermally-conductive pressure-sensitive adhesive layer to cause the occurrence of unevenness in the thickness. The first average particle size is a value based on volume obtained by a particle size distribution measurement method in a laser scattering method. To be specific, the first average particle size is obtained by measuring a D50 value with a laser scattering particle size analyzer.

In the case where the (b) a hydrated metal compound is thermally conductive particles in needle shapes or plate shapes, the maximum length of each of the thermally conductive particles is 0.1 to 1000 µm, preferably 1 to 100 µm, or more preferably 5 to 45 µm. When the maximum length thereof is above 1000 µm, there is a disadvantage that the thermally conductive particles easily aggregate with each other and the handling thereof becomes difficult. In addition, the aspect ratio (in the case of a needle-shaped crystal, expressed by the length of the long axis/the length of the short axis or the length of the long axis/the thickness and in the case of a plate-shaped crystal, expressed by the diagonal length/the thickness or the length of the long side/the thickness) thereof is 1 to 10000, or preferably 1 to 1000.

As the (b) a hydrated metal compound, preferably, the hydrated metal compounds having a different particle size are used in combination of two or more. When the hydrated metal compounds having a different particle size are used in combination of two or more, preferably, for example, the particles having a large particle size of 10 µm or more and a small particle size of less than 10 µm, in a particle size of the hydrated metal compound, are used in combination. By using the hydrated metal compounds having a different particle size in combination in this way, there is an effect that the thermally conductive particles further closely and tightly fill the flame-retardant thermally-conductive pressure-sensitive adhesive layer and a thermally conductive path by the hydrated metal compound is easily formed, so that the thermally conductive properties are improved. In order to obtain the effect, for example, desirably, the mixing ratio (ratio by weight) of a large particle having the first average particle size or the maximum length of 10 µm or more to a small particle having the first average particle size or the maximum length of less than 10 µm is 1:10 to 10:1, preferably 1:5 to 5:1, or more preferably 1:2 to 2:1.

A commercially available product can be used as the (b) a hydrated metal compound. Examples of the commercially available product can include as the aluminum hydroxide, "HIGILITE H-100ME" (the first average particle size of 75 µm), "HIGILITE H-10" (the first average particle size of 55 µm), "HIGILITE H-32" (the first average particle size of 8 µm), and "HIGILITE H-42" (the first average particle size of 1 µm) manufactured by SHOWA DENKO K.K. and "B103ST" (the first average particle size of 8 µm) manufactured by Nippon Light Metal Co., Ltd. and as the magnesium hydroxide, "KISUMA 5A" (the first average particle size of 1 µm) manufactured by Kyowa Chemical Industry Co., Ltd.

The content of the (b) a hydrated metal compound constituting the flame-retardant thermally-conductive pressure-sensitive adhesive layer is not particularly limited. Preferably, the content thereof with respect to 100 parts by weight of the acrylic polymer in the flame-retardant thermally-conductive pressure-sensitive adhesive layer is 100 to 500 parts by weight, preferably 200 to 450 parts by weight, or more preferably 300 to 400 parts by weight. When the content of the hydrated metal compound with respect to 100 parts by weight of the acrylic polymer is 100 to 500 parts by weight, high thermal conductivity and flame retardancy can be obtained. On the other hand, when the content thereof is less than 100 parts by weight, there may be a case where sufficient thermally conductive properties and flame retardancy cannot be imparted. When the content thereof is above 500 parts by weight, there may be a case where the flexibility is reduced, so that the pressure-sensitive adhesive force and the holding force are reduced.

In the present invention, in order to improve the thermally conductive properties, other thermally conductive particles may be contained. Examples of the thermally conductive particles capable of being used in the present invention include a boron nitride, an aluminum nitride, a silicon nitride, a gallium nitride, a silicon carbonate, a silicon dioxide, an aluminum oxide, a magnesium oxide, a titanium oxide, a zinc oxide, a tin oxide, a copper oxide, a nickel oxide, an antimony doped tin oxide, a calcium carbonate, a barium titanate, a potassium titanate, copper, silver, gold, nickel, aluminum, platinum, a carbon black, a carbon tube (a carbon nanotube), a carbon fiber, and diamond. The size (the particle size) of each of the thermally conductive particles can be used in the same manner as that in the hydrated metal compound.

In the present invention, a commercially available product can be used as the thermally conductive particles. Examples of the commercially available product can include as the boron nitride, "HP-40" manufactured by MIZUSHIMA FERROALLOY CO., LTD. and "PT620" manufactured by Momentive Performance Materials Inc.; as the aluminum oxide, "AS-50" manufactured by SHOWA DENKO K.K.; as the antimony doped tin oxide, "SN-100S", "SN-100P"', and "SN-100D (an aqueous dispersion product)" manufactured by ISHIHARA SANGYO KAISHA, LTD.; as the titanium oxide, the "TTO series"" manufactured by ISHIHARA SANGYO KAISHA, LTD.; and as the zinc oxide, "SnO-310", "SnO-350", and "SnO-410" manufactured by SUMITOMO OSAKA CEMENT Co., Ltd.

When the thermally conductive particles are used in the present invention, the content thereof is not particularly limited. Preferably, the content thereof with respect to 100 parts by weight of the acrylic polymer in the flame-retardant thermally-conductive pressure-sensitive adhesive layer is, for example, 250 parts by weight or less, preferably 1 to 270 parts by weight, or more preferably 5 to 280 parts by weight. When the content of the thermally conductive particles is above 280 parts by weight, there may be a case where the flexibility of the flame-retardant thermally-conductive pressure-sensitive adhesive layer is reduced or the flame retardancy is reduced.

In order to stably disperse the hydrated metal compound and the thermally conductive particles without being aggregated, preferably, a dispersant is used in the flame-retardant thermally-conductive pressure-sensitive adhesive layer of the present invention. The dispersant is not particularly limited and preferably, phosphate ester is used. Examples of the phosphate ester include phosphoric monoester of polyoxyethylene alkyl (or alkylallyl) ether or polyoxyethylene alkyl aryl ether; phosphoric diester of polyoxyethylene alkyl ether or polyoxyethylene alkyl aryl ether; and phosphoric triester or a derivative thereof. These phosphate ester-based dispersants may be used alone or in combination of two or more. Of these, in view of temporal stability of the thermally conductive particles, preferably, phosphoric monoester and phosphoric diester of polyoxyethylene alkyl ether or polyoxyethylene alkyl aryl ether are used. Examples thereof include the "PLYSURF" series such as A212E, A210G, A212C, and A215C manufactured by DAI-ICHI KOGYO SEIYAKU CO., LTD. and the "PHOSPHANOL" such as RE610, RS710, and RS610 manufactured by TOHO Chemical Industty Co., Ltd. The mixing amount of the dispersant is not particularly limited and is, for example, 0.01 to 10 parts by weight, preferably 0.05 to 5 parts by weight, or more preferably 0.1 to 3 parts by weight with respect to 100 parts by weight of the acrylic polymer.

In the present invention, in order to improve the flame retardancy, another flame retardant may be contained as long as it does not adversely affect the adhesive properties and the thermally conductive properties. Examples of the flame retardant capable of being used in the present invention include a metal carboxylate such as basic magnesium carbonate, magnesium-calcium carbonate, calcium carbonate, barium carbonate, and dolomite; a metal hydrate (a hydrate of a metal compound) such as hydrotalcite and borax; a barium metaborate; a magnesium oxide; an ammonium polyphosphate; a zinc borate; a tin compound; an organophosphate; a red phosphate; a carbon black; and a silicone-based flame retardant.

When the flame retardant is used in the present invention, the content thereof is not particularly limited. Preferably, the content thereof with respect to 100 parts by weight of the acrylic polymer in the flame-retardant thermally-conductive pressure-sensitive adhesive layer is 250 parts by weight or less, preferably 1 to 270 parts by weight, or more preferably 5 to 280 parts by weight. When the content of the flame retardant is above 250 parts by weight, there may be a case where the adhesive properties are remarkably reduced due to the bleed out of the monomer or the thermally conductive properties are reduced.

In the present invention, when the thermally conductive particles and/or the flame retardant are/is used in combination with the (b) a hydrated metal compound, preferably, the total amount thereof with respect to 100 parts by weight of the acrylic polymer in the flame-retardant thermally-conductive pressure-sensitive adhesive layer is 100 to 500 parts by weight, preferably 200 to 450 parts by weight, or more preferably 300 to 400 parts by weight. When the content of the hydrated metal compound, the thermally conductive particles, and/or the flame retardant with respect to 100 parts by weight of the acrylic polymer is 100 to 500 parts by weight, high  thermal conductivity and flame retardancy can be obtained. On the other hand, when the content of the hydrated metal compound, the thermally conductive particles, and/or the flame retardant is less than 100 parts by weight, sufficient thermally conductive properties and flame retardancy may not be capable of being imparted. When the content of the hydrated metal compound, the thermally conductive particles, and/or the flame retardant is above 500 parts by weight, there may be a case where the flexibility is reduced and the pressure-sensitive adhesive force and the holding force are reduced.

In the present invention, when the thermally conductive particles and/or the flame retardant are/is used in combination with the (b) a hydrated metal compound, preferably, the content ratio of the hydrated metal compound with respect to the total amount of the hydrated metal compound, the thermally conductive particles, and/or the flame retardant is 50 weight % or more, preferably 60 weight % or more, or more preferably 70 weight % or more. When the content ratio of the hydrated metal compound is 50 weight % or more, high thermal conductivity and flame retardancy can be obtained. On the other hand, when the content ratio of the hydrated metal compound is less than 50 weight %, sufficient thermally conductive properties and flame retardancy may not be capable of being imparted.

(Bubbles)

In the flame-retardant thermally-conductive pressure-sensitive adhesive sheet of the present invention, the flame-retardant thermally-conductive pressure-sensitive adhesive layer can contain the (c) bubbles. By allowing the flame-retardant thermally-conductive pressure-sensitive adhesive layer to contain the (c) bubbles, a thickness and cushioning properties can be imparted to the flame-retardant thermally-conductive pressure-sensitive adhesive sheet, so that the followability to uneven surface between the flame-retardant thermally-conductive pressure-sensitive adhesive sheet and the adherend is improved.

The content of the (c) bubbles can be appropriately selected as long as it does not damage the thermally conductive properties or the like of the flame-retardant thermally-conductive pressure-sensitive adhesive sheet and is, for example, 5 to 50 volume %, preferably 10 to 40 volume %, or more preferably 12 to 35 volume % with respect to the total volume of the flame-retardant thermally-conductive pressure-sensitive adhesive layer. When the amount of bubbles is less than 5 volume %, the adhesiveness to the adherend and the followability to unevenness thereof are often poor. When the amount of bubbles is above 50 volume %, there may be a case where the heat insulating effect by the bubbles becomes too large, so that the thermally conductive properties are reduced; the bubbles that penetrate through a sheet are formed, so that the adhesive properties become poor; or the flame-retardant thermally-conductive pressure-sensitive adhesive layer becomes too soft, so that the shearing force becomes poor.

Desirably, the bubbles to be mixed in the flame-retardant thermally-conductive pressure-sensitive adhesive layer are basically the bubbles of independent bubble type. However, the bubbles of independent bubble type and those of continuous bubble type may be present in mixture.

The bubbles usually have sphere shapes. Alternatively, the bubbles may have distorted sphere shapes. The average bubble size (the diameter) of each of the bubbles is not particularly limited and can be selected within a range of, for example, 1 to 1000 $\mu$m, preferably 10 to 500 $\mu$m, or more preferably 30 to 300 $\mu$m.

A gas component contained in the bubbles (a gas component that forms the bubbles; may be referred to as a "bubble-forming gas") is not particularly limited and examples thereof can include an inert gas such as nitrogen, carbon dioxide, and argon or various other gas components such as air. It is important to use a bubble-forming gas that does not inhibit a reaction when the reaction such as a polymerization reaction is performed after mixing of the bubble-forming gas. As the bubble-forming gas, in view of not inhibiting a reaction and cost, preferably, nitrogen is used.

A method for mixing the bubbles is not particularly limited. Preferably, it is desirable that a bubble-containing precursor composition is formed by mixing the (c) bubbles into a precursor composition of the flame-retardant thermally-conductive pressure-sensitive adhesive layer (hereinafter, may be referred to as a "precursor composition") containing a mixture of a monomer component containing an alkyl (meth)acrylate as a main component, containing a polar group-containing monomer, and not substantially containing a carboxyl group-containing monomer or a partial polymer thereof and the hydrated metal compound, and then, an ultraviolet ray is applied to the obtained bubble-containing precursor composition to form the flame-retardant thermally-conductive pressure-sensitive adhesive layer.

As a method for mixing the bubbles, a known bubble-mixing method can be used. An example of a device includes a device in which on a disk having a through hole in the center thereof, a stator with many small teeth and a rotor that is opposed to the stator with teeth and has the same small teeth as those of the stator on the disk are provided. The precursor composition is introduced between the teeth on the stator and the teeth on the rotor in the device and the gas component (the bubble-forming gas) for forming the bubbles via the through hole is introduced into the precursor composition, while the rotor is allowed to run at high speed, so that the bubble-containing precursor composition in which the bubble-forming gas is finely dispersed to be mixed in the precursor composition can be obtained.

In order to suppress or prevent integration of the bubbles, preferably, the steps from mixing of the bubbles to forming of the flame-retardant thermally-conductive pressure-sensitive adhesive layer are continuously performed as a series of steps. That is, after preparing the bubble-containing precursor composition by allowing the bubbles to be mixed as described above, subsequently, the flame-retardant thermally-conductive pressure-sensitive adhesive layer is preferably formed using the bubble-containing precursor composition by an appropriate forming method.

(Fluorine-Based Surfactant)

In the present invention, a fluorine-based surfactant can be blended into the bubble-containing precursor composition. By using the fluorine-based surfactant, degree of adhesiveness and frictional resistance of the hydrated metal compound and the acrylic polymer in the flame-retardant thermally-conductive pressure-sensitive adhesive layer are reduced and stress dispersibility is developed. Thus, the flame-retardant thermally-conductive pressure-sensitive adhesive layer of the present invention can obtain high adhesive properties. In addition to the reduction effects such as the above-described frictional resistance by having a fluorine-based hydrocarbon group, effects of increasing bubble mixing properties and bubble stability can be also obtained.

An example of the fluorine-based surfactant includes a fluorine-based surfactant having, in a molecule, an oxyC$_{2-3}$ alkylene group and a fluorine-based hydrocarbon group. The oxyC$_{1-3}$ alkylene group is represented by a formula: -R-O- (R represents a straight chain or branched chain alkylene group having 2 or 3 carbon atoms). The fluorine-based surfactant is not particularly limited as long as it has an oxyC$_{2-3}$ alkylene group and a fluorine-based hydrocarbon group. In view of dispersibility with respect to the acrylic polymer, preferably, a non-ionic surfactant is used. The fluorine-based surfactant may have, in a molecule, any one of an oxyethylene group (-CH$_2$CH$_2$O-) and an oxypropylene group [-CH$_2$CH (CH$_3$)O-] or two or more thereof. These fluorine-based surfactants can be used alone or in combination of two or more.

The fluorine-based hydrocarbon group is not particularly limited and preferably, a perfluoro group is used. The perfluoro group may be monovalent or may be polyvalent such as divalent or higher valent. The fluorine-based hydrocarbon group may have a double bond or a triple bond and may have a straight chain, a branched chain, or a cyclic structure. The number of carbon atoms of the fluorine-based hydrocarbon group is not particularly limited and is 1 or 2 or more, preferably 3 to 30, or more preferably 4 to 20. One or two or more fluorine-based hydrocarbon group(s) is/are introduced into a molecule of the surfactant. Examples of a form of the oxyC$_{2-3}$ alkylene group may include any one of an alcohol in which a hydrogen atom is bonded to an oxygen atom at the end, ether in which another hydrocarbon group is bonded to an oxygen atom at the end, and ester in which another hydrocarbon group is bonded to an oxygen atom via a carbonyl group. An example of a form of the $oxyC_{2-3}$ alkylene group may also include a form having the structure in a part of the cyclic structure such as cyclic ethers and lactones.

The structure of the fluorine-based surfactant is not particularly limited and for example, a copolymer that contains, as monomer components, a monomer having an $oxyC_{2-3}$ alkylene group and a monomer having a fluorine-based hydrocarbon group can be preferably used. As a form of the copolymer, various forms such as a block copolymer and a graft copolymer are used. Any one of these is preferably used.

Examples of the block copolymer (a copolymer having an $oxyC_{2-3}$ alkylene group and a fluorine-based hydrocarbon group in the main chain) include polyoxyethylene perfluoroalkyl ether, polyoxyethylene perfluoroalkylate, polyoxypropylene perfluoroalkyl ether, polyoxyisopropylene perfluoroalkyl ether, polyoxyethylene sorbitan perfluoroalkylate, polyoxyethylene polyoxypropylene block copolymer perfluoroalkylate, and polyoxyethylene glycol perfluoroalkylate.

An example of the graft copolymer (a copolymer having an $oxyC_{2-3}$ alkylene group and a fluorine-based hydrocarbon group in a side chain) includes a copolymer containing, as monomer components, at least a vinyl compound having a polyoxyalkylene group and a vinyl compound having a fluorine-based hydrocarbon group. Preferably, an acrylic copolymer, in particular, is used. An example of the vinyl compound having a polyoxyalkylene group includes a polyoxyalkylene (meth)acrylate such as polyoxyethylene (meth)acrylate, polyoxypropylene (meth)acrylate, and polyoxyethylene polyoxypropylene (meth)acrylate. An example of the vinyl compound having a fluorine-based hydrocarbon group includes (meth)acrylate ester having a fluorine-based hydrocarbon group such as a perfluoroalkyl (meth)acrylate including perfluorobutyl (meth)acrylate, perfluoroisobutyl (meth)acrylate, and perfluoropentyl (meth)acrylate.

The fluorine-based surfactant may have a structure such as an alicyclic hydrocarbon group or an aromatic hydrocarbon group in a molecule, other than the above-described structure. The fluorine-based surfactant may have various functional groups such as a carboxyl group, a sulfonic acid group, a cyano group, an amide group, and an amino group as long as it does not inhibit the dispersibility with respect to the acrylic polymer. When the fluorine-based surfactant is a vinyl copolymer, as the monomer component, for example, a monomer component that is copolymerizable with a vinyl compound having a polyoxyalkylene group and a vinyl compound having a fluorine-based hydrocarbon group may be used. These monomers can be used alone or in combination of two or more.

Preferably, examples of the above-described copolymerizable monomer component include a $C_{1-20}$ alkyl (meth)acrylate such as undecyl (meth)acrylate and dodecyl (meth)acrylate; (meth)acrylate ester having an alicyclic hydrocarbon group such as cyclopentyl (meth)acrylate; and (meth)acrylate ester having an aromatic hydrocarbon group such as phenyl (meth)acrylate. Other than those, examples thereof also include a carboxyl group-containing monomer such as maleic acid and crotonic acid; a sulfonic acid group-containing monomer such as sodium vinylsulfonate; an aromatic vinyl compound such as styrene and vinyltoluene; olefins or dienes such as ethylene and butadiene; vinyl ethers such as vinyl alkyl ether; an amide group-containing monomer such as acrylamide; an amino group-containing monomer such as (meth)acryloylmorpholine; a glycidyl group-containing monomer such as methylglycidyl (meth)acrylate; and an isocyanate group-containing monomer such as 2-methacryloyloxyethyl isocyanate. Furthermore, examples thereof may include a polyfunctional copolymerizable monomer (a polyfunctional monomer) such as dipentaerythritol hexa(meth)acrylate and divinylbenzene.

The molecular weight of the fluorine-based surfactant is not particularly limited and when the weight average molecular weight is less than 20000 (for example, 500 or more and less than 20000), the effects of reducing the adhesiveness and the frictional resistance between the acrylic polymer in the flame-retardant thermally-conductive pressure-sensitive adhesive layer and the thermally conductive particles are high. In addition, when the fluorine-based surfactants each having a weight average molecular weight of 20000 or more (for example, 20000 to 100000, preferably 22000 to 80000, or more preferably 24000 to 60000) are used in combination, the bubble mixing properties and the bubble stability of the mixed bubbles are increased.

Specific examples of the fluorine-based surfactant having an $oxyC_{2-3}$ alkylene group and a fluorine-based hydrocarbon group and having a weight average molecular weight of less than 20000 include trade name: "FTERGENT 251" (manufactured by NEOS COMPANY LIMITED), trade name: "FTX-218" (manufactured by NEOS COMPANY LIMITED), trade name: "MEGAFAC F-477" (manufactured by DIC Corporation), trade name: "MEGAFAC F-470" (manufactured by DIC Corporation), trade name: "SURFLON S-381" (manufactured by AGC SEIMI CHEMICAL CO., LTD.), trade name: "SURFLON S-383" (manufactured by AGC SEIMI CHEMICAL CO., LTD.), trade name: "SURFLON S-393" (manufactured by AGC SEIMI CHEMICAL CO., LTD.), trade name: "SURFLON KH-20" (manufactured by AGC SEIMI CHEMICAL CO., LTD.), and trade name: "SURFLON KH-40" (manufactured by AGC SEIMI CHEMICAL CO., LTD.). Specific examples of the fluorine-based surfactant having an $oxyC_{2-3}$ alkylene group and a fluorine-based hydrocarbon group and having a weight average molecular weight of 20000 or more include trade name: "EFTOP EF-352" (manufactured by JEMCO Inc.), trade name: "EFTOP EF-801" (manufactured by JEMCO Inc.), and trade name: "Unidyne TG-656" (manufactured by DAIKIN INDUSTRIES, ltd.). Any one of these can be preferably used in the present invention.

The used amount (the solid content) of the fluorine-based surfactant is not particularly limited and can be selected within a range of, for example, 0.01 to 5 parts by weight, preferably 0.02 to 3 parts by weight, or more preferably 0.03 to 2 parts by weight with respect to 100 parts by weight of the total monomer component for forming the acrylic polymer in the flame-retardant thermally-conductive pressure-sensitive adhesive layer. When the used amount thereof is less than 0.01 parts by weight, the stability of the bubbles may not be easily obtained and when the used amount thereof is above 5 parts by weight, the adhesive properties may be reduced.

In the present invention, the dispersant, which stably disperses the above-described hydrated metal compound, and the fluorine-based surfactant, which reduces the degree of adhesiveness and the frictional resistance between the hydrated metal compound and the acrylic polymer in the flame-retardant thermally-conductive pressure-sensitive adhesive layer and develops the stress dispersibility, can be used in combination. By using the dispersant and the fluorine-based surfactant in combination, the hydrated metal compound is capable of being stably present without aggregating in the flame-retardant thermally-conductive pressure-sensitive adhesive layer by a smaller amount than when the dispersant or the fluorine-based surfactant is used alone, leading to the improvement of the thermally conductive properties. The stress dispersibility of the flame-retardant thermally-conductive pressure-sensitive adhesive layer is improved and further higher adhesive properties can be expected. When the two additives are used in combination, the mixing amount thereof is not particularly limited and desirably, the additives are used at a ratio (ratio by weight) of the dispersant to the fluorine-based surfactant of 1:20 to 20:0.01, preferably 1:10 to 10:0.01, or more preferably 1:5 to 5:0.01.

In the present invention, in order to stably mix the bubbles to be present in the flame-retardant thermally-conductive pressure-sensitive adhesive layer, preferably, the bubbles are blended to be mixed as the last component in the precursor composition, and in particular, the viscosity of the precursor composition before the bubbles are mixed therein is preferably increased. The viscosity of the precursor composition is not particularly limited as long as it is the viscosity that is capable of stably retaining the mixed bubbles. For example, desirably, the viscosity measured by using a BH viscometer as a viscometer under the conditions of a rotor: a No. 5 rotor, the number of rotations: 10 rpm, and a measurement temperature: 30°C is 5 to 50 Pa·s (preferably, 10 to 40 Pa·s). When the viscosity (a BH viscometer, a No. 5 rotor, 10 rpm, 30°C) of the precursor composition is less than 5 Pa·s, there may be a case where the viscosity is too low and the mixed bubbles are easily integrated to be released outside the system. On the other hand, when the viscosity thereof is above 50 Pa·s, the viscosity is too high in forming of the flame-retardant thermally-conductive pressure-sensitive adhesive layer, so that the application becomes difficult.

The viscosity of the precursor composition can be adjusted by, for example, a method in which various polymer components such as an acrylic rubber and a thickening additive are blended or a method in which a monomer component for forming an acrylic polymer (for example, a monomer component such as (meth)acrylate ester for forming an acrylic polymer or the like) is partially polymerized to serve as a partial polymer. To be specific, for example, a monomer component for forming an acrylic polymer (for example, a monomer component such as (meth)acrylate ester for forming an acrylic polymer or the like) and a polymerization initiator (for example, a photopolymerization initiator, a thermal polymerization initiator, or the like) are mixed to prepare a monomer mixture. A polymerization reaction in accordance with the type of the polymerization initiator is performed with respect to the monomer mixture and a composition (a syrup) containing a partial polymer in which a part of the monomer component only is polymerized is prepared. Thereafter, the hydrated metal compound and, if necessary, the monomer, the dispersant, the fluorine-based surfactant, and various additives to be described later are blended into the syrup, so that the precursor composition having an appropriate viscosity at which the bubbles are capable of being stably contained can be prepared. By introducing the bubbles into the precursor composition to be mixed, the bubble-containing precursor composition that stably contains the bubbles can be obtained. In the preparation of the syrup, the fluorine-based surfactant and the hydrated metal compound may be appropriately blended in the monomer mixture in advance.

In the present invention, in order to adjust the cohesive force of the flame-retardant thermally-conductive pressure-sensitive adhesive layer, other than the above-described method in which the polyfunctional monomer is blended to introduce the cross-linking structure into the acrylic polymer, a cross-linking agent is capable of being used. As the cross-linking agent, a cross-linking agent that is usually used can be used. Examples thereof include an epoxy cross-linking agent, an isocyanate cross-linking agent, a silicone cross-linking agent, an oxazoline cross-linking agent, an aziridine cross-linking agent, a silane cross-linking agent, an alkyletherified melamine cross-linking agent, and a metal chelate cross-linking agent. Preferably, an isocyanate cross-linking agent and an epoxy cross-linking agent, in particular, can be used.

To be specific, examples of the isocyanate cross-linking agent include tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, and polymethylene polyphenyl isocyanate and an adduct of the above-described component with a polyol such as trimethylol propane. Also, as the isocyanate cross-linking agent, a compound containing, in a molecule, at least one or more isocyanate group(s) and one or more unsaturated bond(s), to be specific, a 2-isocyanate ethyl (meth)acrylate or the like can be used.

Examples of the epoxy cross-linking agent include bisphenol A, epichlorohydrin type epoxy resin, ethylene glycidyl ether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylene diamine, and 1,3-bis(N,N'-diamine glycidyl aminomethyl)cyclohexane.

In the present invention, when the cross-linking agent is used, the content thereof is not particularly limited. Preferably, the content thereof with respect to 100 parts by weight of the acrylic polymer in the flame-retardant thermally-conductive pressure-sensitive adhesive layer is, 0.01 to 5 parts by weight, preferably 0.01 to 3 parts by weight, or more preferably 0.01 to 2 parts by weight. When the content of the cross-linking agent is above 5 parts by weight, the flexibility may not be capable of being obtained. When the content thereof is less than 0.01 parts by weight, the cohesive properties may not be capable of being obtained.

In order to improve the adhesive properties, a tackifier resin can be contained in the flame-retardant thermally-conductive pressure-sensitive adhesive layer of the present invention. The tackifier resin is not particularly limited. When the acrylic polymer is obtained by copolymerizing the monomer component by polymerization using an ultraviolet ray, a hydrogenated tackifier resin is preferably used because polymerization inhibition does not easily occur even when the hydrogenated tackifier resin is used in combination. The hydrogenated tackifier resin can be selected from a derivative obtained by hydrogenating a tackifier resin. Examples of the tackifier resin include a petroleum resin, a terpene-based resin, a coumarone indene resin, a styrene-based resin, a rosin-based resin, an alkyl phenol resin, and a xylene resin. The system of the hydrogenated petroleum resin can be selected from aromatic, dicyclopentadiene, aliphatic, aromatic-dicyclopentadiene copolymer, or the like. The hydrogenated terpene-based resin can be selected from a terpene phenol resin, an aromatic terpene resin, or the like. Of these, preferably, a petroleum resin or a terpene-based resin, in particular, is used.

The softening point of the tackifier resin is preferably 80 to 200°C, or more preferably 100 to 200°C. By adjusting the softening point of the tackifier resin within the above-described range, the effect of obtaining a high cohesive force is capable of being obtained.

In the present invention, when the tackifier resin is used, the content thereof is not particularly limited and is preferably 1 to 50 parts by weight, more preferably 2 to 40 parts by weight, or particularly preferably 3 to 30 parts by weight with respect to 100 parts by weight of the acrylic polymer in the flame-retardant thermally-conductive pressure-sensitive adhesive layer. When the added amount of the tackifier resin is above 50 parts by weight, the cohesive force may be reduced. When the added amount thereof is less than 1 part by weight, the effect of improving the adhesive force may not be capable of being obtained.

In the present invention, in order to improve the adhesive properties, an acrylic oligomer can be contained. The acrylic oligomer is a polymer that has a higher glass transition temperature (Tg) and a lower weight average molecular weight than those of the (a) an acrylic polymer. The acrylic oligomer has an advantage that it functions as a tackifier resin and does not easily generate polymerization inhibition in polymerization using an ultraviolet ray.

In the present invention, desirably, the acrylic oligomer has a glass transition temperature (Tg) of about 0°C or more and 300°C or less, preferably of about 20°C or more and 300°C or less, or more preferably of about 40°C or more and 300°C or less. When the glass transition temperature (Tg) is less than about 0°C, there may be a case where the cohesive force at the room temperature or more of the flame-retardant thermally-conductive pressure-sensitive adhesive layer is reduced, and the holding properties and the adhesive properties at a high temperature are reduced. The Tg of the acrylic oligomer can be calculated based on the formula of Fox in the same manner as in the Tg of the (a) an acrylic polymer.

The weight average molecular weight of the acrylic oligomer is 1000 or more and less than 30000, preferably 1500 or more and less than 20000, or more preferably 2000 or more and less  than 10000. When the weight average molecular weight is 30000 or more, the effect of improving the adhesive force may not be capable of being sufficiently obtained. When the weight average molecular weight is less than 1000, the acrylic oligomer has a low molecular weight, so that a reduction in the adhesive force and the holding properties may occur. In the present invention, the weight average molecular weight of the acrylic oligomer can be measured by a GPC method with standard polystyrene calibration. To be specific, the weight average molecular weight of the acrylic oligomer is measured by using TSKgel GMH-H(20) $\times$ 2 as a column in HPLC8020 manufactured by TOSOH CORPORATION by a tetrahydrofuran solvent under the conditions of a flow rate of about 0.5 ml/min.

In the present invention, examples of the monomer constituting the acrylic oligomer include an alkyl (meth) acrylate such as methyl (meth)acrylate, ethyl (meth)acrylate, propyl (meth)acrylate, isopropyl (meth)acrylate, butyl (meth) acrylate, isobutyl (meth)acrylate, s-butyl (meth)acrylate, t-butyl (meth)acrylate, pentyl (meth)acrylate, isopentyl (meth) acrylate, hexyl (meth)acrylate, 2-ethylhexyl (meth)acrylate, heptyl (meth)acrylate, octyl (meth)acrylate, isooctyl (meth) acrylate, nonyl (meth)acrylate, isononyl (meth)acrylate, decyl (meth)acrylate, isodecyl (meth)acrylate, undecyl (meth) acrylate, and dodecyl (meth)acrylate; ester of (meth)acrylic acid with an alicyclic alcohol such as cyclohexyl (meth) acrylate and isobornyl (meth)acrylate; aryl (meth)acrylate such as phenyl (meth)acrylate and benzyl (meth)acrylate; and (meth)acrylate obtained from a terpene compound derivative alcohol. These (meth)acrylates can be used alone or in combination of two or more.

Preferably, the (meth)acrylate oligomer contains, as a monomer unit, an acrylic monomer having a relatively bulky structure. Examples thereof include an alkyl (meth)acrylate in which an alkyl group has a branched structure such as isobutyl (meth)acrylate and t-butyl (meth)acrylate; ester of (meth)acrylic acid with an alicyclic alcohol such as cyclohexyl (meth)acrylate and isobornyl (meth)acrylate; and a (meth)acrylate having a cyclic structure such as aryl (meth)acrylate including phenyl (meth)acrylate and benzyl (meth)acrylate. By allowing the acrylic oligomer to have the bulky structure, the adhesive properties of the flame-retardant thermally-conductive pressure-sensitive adhesive layer can be further improved. In view of bulkiness, in particular, an acrylic oligomer having a cyclic structure is effective and an acrylic oligomer having a plurality of rings is even more effective. When an ultraviolet ray is used in synthesis of the acrylic oligomer and fabrication of the flame-retardant thermally-conductive pressure-sensitive adhesive layer, in view of not easily generating polymerization inhibition, an acrylic oligomer having a saturated bond is preferably used. As a monomer constituting the acrylic oligomer, a (meth)acrylate in which an alkyl group has a branched structure or ester with an alicyclic alcohol can be preferably used.

In this view, in the present invention, examples of the acrylic oligomer include a copolymer of cyclohexyl methacrylate (CHMA) and isobutyl methacrylate (IBMA); a copolymer of cyclohexyl methacrylate (CHMA) and isobornyl methacrylate (IBXMA); a copolymer of cyclohexyl methacrylate (CHMA) and acryloyl morpholine (ACMO); a copolymer of cyclohexyl methacrylate (CHMA) and diethylacrylamide (DEAA); a copolymer of 1-adamantyl acrylate (ADA) and methyl methacrylate (MMA); a copolymer of dicyclopentanyl methacrylate (DCPMA) and isobornyl methacrylate (IBXMA); and a homopolymer such as dicyclopentanyl methacrylate (DCPMA), cyclohexyl methacrylate (CHMA), isobornyl methacrylate (IBXMA), isobornyl acrylate (IBXA), dicyclopentanyl acrylate (DCPA), 1-adamantyl methacrylate (ADMA), and 1-adamantyl acrylate (ADA).

In the present invention, when the acrylic oligomer is used, the content thereof is not particularly limited and is 1 to 70 parts by weight, preferably 2 to 50 parts by weight, or more preferably 3 to 40 parts by weight with respect to 100 parts by weight of the acrylic polymer in the flame-retardant thermally-conductive pressure-sensitive adhesive layer. When the added amount of the acrylic oligomer is above 70 parts by weight, there may be a case where the cohesive force is reduced or a case where the elastic modulus becomes high and the adhesive properties at a low temperature becomes poor and the pressure-sensitive adhesive force is not developed at the room temperature. When the added amount of the acrylic oligomer is less than 1 part by weight, the effect of improving the adhesive force may not be capable of being obtained.

For the purpose of further improving the adhesive force, the durability, and the affinity between the hydrated metal compound and the acrylic polymer, a silane coupling agent can be used in the flame-retardant thermally-conductive pressure-sensitive adhesive layer of the present invention. As the silane coupling agent, a known silane coupling agent can be appropriately used without any particular limitation.

To be specific, examples of the silane coupling agent include an epoxy group-containing silane coupling agent such as 3-glycidoxypropyltrimethoxysilane, 3-glycidoxypropyltriethoxysilane, 3-glycidoxypropylmethyldiethoxysilane, and 2-(3,4-epoxycyclohexyl)ethyltrimethoxysilane; an amino group-containing silane coupling agent such as 3-aminopropyltrimethoxysilane, N-2-(aminoethyl)-3-aminopropylmethyldimethoxysilane, and 3-triethoxysilyl-N-(1,3-dimethylbutylidene)propylamine; a (meth)acrylic group-containing silane coupling agent such as 3-acryloxypropyltrimethoxysilane and 3-methacryloxypropyltriethoxysilane; and an isocyanate group-containing silane coupling agent such as 3-isocyanatepropyltriethoxysilane. These silane coupling agents may be used alone or in combination of two or more.

The content of the above-described silane coupling agent with respect to 100 parts by weight of the above-described acrylic polymer is preferably 0.01 to 10 parts by weight, more preferably 0.02 to 5 parts by weight, or further more preferably 0.05 to 2 parts by weight. By using the above-described silane coupling agent within the above-described range, the cohesive force and the durability can be further surely improved. On the other hand, when the content thereof is less than 0.01 parts by weight, there may be a case where the surfaces of the thermally conductive particles contained in the flame-retardant thermally-conductive pressure-sensitive adhesive layer cannot be covered and the affinity is not improved. On the other hand, when the content thereof is above 10 parts by weight, the thermally conductive properties may be reduced.

(Other Components)

In the present invention, in addition to the (a) an acrylic polymer, the (b) a hydrated metal compound, the (c) bubbles, and the above-described various components, an appropriate additive may be contained in the flame-retardant thermally-conductive pressure-sensitive adhesive layer in accordance with the use of the flame-retardant thermally-conductive pressure-sensitive adhesive layer. An appropriate additive such as a plasticizer, a filler, an oxidation inhibitor, and a colorant (a pigment, a dye, or the like) may be contained therein.

(Flame-Retardant Thermally-Conductive Pressure-Sensitive Adhesive Sheet)

The flame-retardant thermally-conductive pressure-sensitive adhesive sheet of the present invention is described with reference to figures. The flame-retardant thermally-conductive pressure-sensitive adhesive sheet of the present invention includes the flame-retardant thermally-conductive pressure-sensitive adhesive layer containing at least the (a) an acrylic polymer and the (b) a hydrated metal compound and may have a structure in which the flame-retardant thermally-conductive pressure-sensitive adhesive layer is provided on at least one surface of a substrate. The flame-retardant thermally-conductive pressure-sensitive adhesive sheet may have a form in which both surfaces thereof serve as adhesive surfaces (pressure-sensitive adhesion surfaces) or may have a form in which one surface thereof only serves as an adhesive surface. To be specific, examples of the form of the flame-retardant thermally-conductive pressure-sensitive adhesive sheet include as shown in FIG. 1 (a), a form in which both surfaces thereof are formed of the flame-retardant thermally-conductive pressure-sensitive adhesive layers only and serve as adhesive surfaces; as shown in FIG. 1 (b), a form in which one surface of a substrate is formed of the flame-retardant thermally-conductive pressure-sensitive adhesive layer and serves as an adhesive surface; and as shown in FIGS. 1 (c) or (d), a form in which at least one surface of a substrate is formed of the flame-retardant thermally-conductive pressure-sensitive adhesive layer and the opposite surface of the substrate is formed of a pressure-sensitive adhesive layer, and both surfaces thereof serve as adhesive surfaces. In the present invention, the "sheet" is used as a concept including a shape such as "tape", "sheet", and "film". The shape in accordance with its intended purpose may be subjected to a punching process or a cutting process.

FIG. 1 shows schematic sectional views for partially illustrating an example of a flame-retardant thermally-conductive pressure-sensitive adhesive sheet of the present invention. In FIG. 1, 10, 11, 12, and 13 represent a flame-retardant thermally-conductive pressure-sensitive adhesive sheet including a flame-retardant thermally-conductive pressure-sensitive adhesive layer, respectively; 2 represents a flame-retardant thermally-conductive pressure-sensitive adhesive layer; 3 represents a substrate; and 4 represents a pressure-sensitive adhesive layer (a non-flame retardant thermally-conductive pressure-sensitive adhesive layer). A flame-retardant thermally-conductive pressure-sensitive adhesive sheet 10 shown in FIG. 1 (a) has a structure of being formed of a flame-retardant thermally-conductive pressure-sensitive adhesive layer 2 only. A flame-retardant thermally-conductive pressure-sensitive adhesive sheet 11 shown in FIG. 1 (b) has a structure in which the flame-retardant thermally-conductive pressure-sensitive adhesive layer 2 is provided on one surface of a substrate 3. A flame-retardant thermally-conductive pressure-sensitive adhesive sheet 12 shown in FIG. 1 (c) has a structure in which the flame-retardant thermally-conductive pressure-sensitive adhesive layers 2 are provided on both surfaces of the substrate 3. A flame-retardant thermally-conductive pressure-sensitive adhesive sheet 13 shown in FIG. 1 (d) has a structure in which the flame-retardant thermally-conductive pressure-sensitive adhesive layer 2 is formed on one surface of the substrate 3 and a pressure-sensitive adhesive layer (a non-flame retardant thermally-conductive pressure-sensitive adhesive layer) 4 is formed on the other surface thereof.

In the case of the structure in which the flame-retardant thermally-conductive pressure-sensitive adhesive layer 2 is formed on one surface of the substrate 3 shown in FIG. 1 (b), a treated layer for preventing a stain or a flaw may be formed on the other surface on which the flame-retardant thermally-conductive pressure-sensitive adhesive layer 2 is not formed of the substrate 3. As the treated layer for preventing a statin, in order to make a stain hardly adhere, for example, a treated layer obtained by processing the surface of a substrate with silicone, fluorine, or the like having a low surface tension can be used. The surface tension is not particularly limited and is preferably 50 dyne/cm or less, more preferably 40 dyne/cm or less, or further more preferably 30 dyne/cm or less. As the treated layer for preventing a flaw, for example, a hard coat layer having a high pencil hardness can be formed. The pencil hardness thereof is, for example, H or more, preferably 2 H or more, or more preferably 3 H or more.

The flame-retardant thermally-conductive pressure-sensitive adhesive sheet of the present invention may be formed in a form of being wound in a roll shape or in a form of sheets being laminated. When the flame-retardant thermally-conductive pressure-sensitive adhesive sheet has a form of being wound in a roll shape or is laminated, the flame-retardant thermally-conductive pressure-sensitive adhesive layers can be prevented from being directly in contact with each other by a release liner.

(Fabrication of Flame-Retardant Thermally-Conductive Pressure-Sensitive Adhesive Layer)

In the flame-retardant thermally-conductive pressure-sensitive adhesive sheet of the present invention, the flame-retardant thermally-conductive pressure-sensitive adhesive layer can be formed using a flame-retardant thermally-conductive pressure-sensitive adhesive composition containing at least (a) an acrylic polymer and (b) a hydrated metal compound by using a known forming method. For example, a monomer component for forming an acrylic polymer, a polymerization initiator (for example, a photopolymerization initiator or a thermal polymerization initiator), and an appropriate solvent (toluene, ethyl acetate, or the like) are mixed to prepare a monomer solution and a polymerization reaction is performed with respect to the monomer solution in accordance with the type of the polymerization initiator, so that a polymer solution containing the acrylic polymer in which the monomer component is copolymerized is prepared. Thereafter, a hydrated metal compound and, if necessary, various additives are blended into the polymer solution, so that the flame-retardant thermally-conductive pressure-sensitive adhesive composition having a viscosity appropriate for application is prepared. The flame-retardant thermally-conductive pressure-sensitive adhesive composition is applied onto a predetermined surface and then, drying, curing, and the like are performed as required, so that the flame-retardant thermally-conductive pressure-sensitive adhesive layer can be formed.

In the present invention, when the curing is used using an ultraviolet ray, a monomer component for forming an acrylic polymer and a photopolymerization initiator are mixed to prepare a monomer mixture. The ultraviolet ray is applied to the monomer mixture and a composition (a syrup) containing a partial polymer in which a part of the monomer component only is polymerized is prepared. Thereafter, the hydrated metal compound and, if necessary, the monomer, the dispersant, the fluorine-based surfactant, and various additives are blended into the syrup, so that a precursor composition having a viscosity appropriate for application is prepared. The precursor composition is applied onto a predetermined surface and then, the ultraviolet ray is applied thereto to be cured, so that the flame-retardant thermally-conductive pressure-sensitive adhesive layer can be formed.

In the present invention, when the flame-retardant thermally-conductive pressure-sensitive adhesive layer having the (c) bubbles is obtained, by introducing the bubbles into the precursor composition to be mixed, so that a bubble-containing precursor composition is obtained. The bubble-containing precursor composition is applied onto a predetermined surface and then, the ultraviolet ray is applied thereto to be cured, so that the flame-retardant thermally-conductive pressure-sensitive adhesive layer having the (c) bubbles can be formed.

As a coating method in application of the flame-retardant thermally-conductive pressure-sensitive adhesive composition or the precursor composition onto a predetermined surface, a coating method that has been conventionally widely used can be used. For example, a coating liquid is applied onto a release liner to be dried and then, another release liner is bonded thereto, so that the flame-retardant thermally-conductive pressure-sensitive adhesive layer can be fabricated. An example of the forming method of the flame-retardant thermally-conductive pressure-sensitive adhesive layer of the present invention includes an extrusion coating method using roll coater, kiss roll coater, gravure coater, reverse coater, roll brush coater, spray coater, dip roll coater, bar coater, knife coater, air knife coater, curtain coater, lip coater, die coater, or the like.

In the present invention, the thickness of the flame-retardant thermally-conductive pressure-sensitive adhesive layer is not particularly limited and can be selected within a range of, for example, 50 to 2000 $\mu$m, preferably 100 to 1500 $\mu$m, or more preferably 500 to 1000 $\mu$m. When the thickness of the flame-retardant thermally-conductive pressure-sensitive adhesive layer is less than 50 $\mu$m, a sufficient adhesive force and holding force may not be capable of being obtained. On the other hand, when the thickness thereof is above 2000 $\mu$m, sufficient flame retardancy and thermally conductive properties may not be capable of being obtained.

(Substrate)

An example of the substrate constituting the flame-retardant thermally-conductive pressure-sensitive adhesive sheet includes an appropriate thin leaf body such as a paper-based substrate including paper; a fiber-based substrate including cloth, non-woven fabric, or a net; a metal-based substrate including a metal foil or a metal plate; a plastic substrate including a plastic film or sheet; a rubber-based substrate including a rubber sheet; and a foaming material including a foaming sheet or a laminate thereof (in particular, a laminate of a plastic substrate with another substrate, a laminate of plastic films (or sheets) with each other, or the like). Examples of a material used in a plastic film or sheet include an olefin-based resin having an $\alpha$-olefin as a monomer component such as polyethylene (PE), polypropylene (PP), an ethylene-propylene copolymer, and an ethylene-vinyl acetate copolymer (EVA); a polyester-based resin such as polyethylene terephthalate (PET), polyethylene naphthalate (PEN), and polybutylene terephthalate (PBT); polyvinyl chloride (PVC); a vinyl acetate-based resin; polyphenylene sulfide (PPS); an amide-based resin such as polyamide (nylon) and wholly aromatic polyamide (aramid); a polyimide resin; and polyether ether ketone (PEEK). These materials can be used alone or in combination of two or more.

When the plastic substrate is used as the substrate, deformability such as the elongation may be controlled by stretching treatment or the like. As the substrate, when the flame-retardant thermally-conductive pressure-sensitive adhesive layer is formed by curing using the ultraviolet ray, preferably, a substrate that does not inhibit the transmission of the ultraviolet ray is used.

The thickness of the substrate can be appropriately selected in accordance with the strength, the flexibility, the intended purpose, or the like and is generally 1000 $\mu$m or less, for example, 1 to 1000 $\mu$m, preferably 1 to 500 $\mu$m, or more preferably about 3 to 300 $\mu$m. The thickness thereof is not particularly limited to this. The substrate may have a form of a single layer or a form of laminated layers.

In order to increase the adhesiveness to the flame-retardant thermally-conductive pressure-sensitive adhesive layer or the like, the surface of the substrate may be subjected to conventional surface treatment such as oxidation treatment by a chemical or physical method such as corona treatment, chromic acid treatment, ozone exposure, flame exposure, high-pressure shock exposure, and ionized radiation treatment, or may be subjected to coating treatment by a primer, a release agent, or the like.

(Pressure-Sensitive Adhesive Layer (Non-Flame Retardant Thermally-Conductive Pressure-Sensitive Adhesive Layer))

In the flame-retardant thermally-conductive pressure-sensitive adhesive sheet of the present invention, when a pressure-sensitive adhesive layer (a non-flame retardant thermally-conductive pressure-sensitive adhesive layer), other than the flame-retardant thermally-conductive pressure-sensitive adhesive layer of the present invention, is used as the pressure-sensitive adhesive layer (ref: FIG. 1 (d), in the case where a flame-retardant thermally-conductive pressure-sensitive adhesive layer is provided on one surface of the substrate and a non-flame retardant thermally-conductive pressure-sensitive adhesive layer is provided on the other surface thereof), the non-flame retardant thermally-conductive pressure-sensitive adhesive layer can be formed by a known forming method of the pressure-sensitive adhesive layer using a known pressure-sensitive adhesive (for example, an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, a fluorine-based pressure-sensitive adhesive, an epoxy-based pressure-sensitive adhesive, or the like). The thickness of the non-flame retardant thermally-conductive pressure-sensitive adhesive layer is not particularly limited and can be appropriately selected in accordance with the purpose, the usage, or the like.

(Release Liner)

In the present invention, in order to protect the adhesive surface (the pressure-sensitive adhesive surface) of the pressure-sensitive adhesive layer such as the flame-retardant thermally-conductive pressure-sensitive adhesive layer and the non-flame retardant thermally-conductive pressure-sensitive adhesive layer, a release liner may be used. That is, it is not always necessary to use the release liner. The release liner is peeled off at the time of using the adhesive surface that is protected by the release liner (that is, at the time of bonding an adherend to the pressure-sensitive adhesive layer that is protected by the release liner).

As the release liner, a conventional release paper or the like can be used. To be specific, an example of the release liner includes a substrate having a release treated layer by a release treating agent on at least one surface thereof. In addition to this, examples thereof can include a low adhesive substrate formed of a fluorine-based polymer (for example, polytetrafluoroethylene, polychlorotrifluoroethylene, polyvinyl fluoride, polyvinylidene fluoride, a tetrafluoroethylene-hexafluoropropylene copolymer, a chlorofluoroethylene-vinylidene fluoride copolymer, or the like) and a low adhesive substrate formed of a non-polar polymer (for example, an olefin-based resin such as polyethylene and polypropylene). When the flame-retardant thermally-conductive pressure-sensitive adhesive sheet 1 is formed of the flame-retardant thermally-conductive pressure-sensitive adhesive layer 2 only shown in FIG. 1 (a), the release liner can be also used as a support for supporting the flame-retardant thermally-conductive pressure-sensitive adhesive layer 2.

As the release liner, for example, a release liner in which a release treated layer is formed on at least one surface of a release liner substrate can be preferably used. Examples of the release liner substrate include a plastic substrate film (a synthetic resin film) such as a polyester film (a polyethylene terephthalate film or the like), an olefin-based resin film (a polyethylene film, a polypropylene film, or the like), a polyvinyl chloride film, a polyimide film, a polyamide film (a nylon film), and a rayon film and papers (wood free paper, Japanese paper, kraft paper, glassine paper, synthetic paper, top-coated paper, or the like). In addition to these, an example thereof also includes a multilayered component (a complex having two or three layers) of the above-described components by lamination, co-extrusion, or the like.

On the other hand, the release treating agent constituting the release treated layer is not particularly limited. Examples thereof can include a silicone-based release treating agent, a fluorine-based release treating agent, and a long chain alkyl-based release treating agent. These release treating agents can be used alone or in combination of two or more.

The thickness, the forming method, or the like of the release liner is not particularly limited.

In the present invention, desirably, the thermal conductivity of the flame-retardant thermally-conductive pressure-sensitive adhesive sheet is 0.30 W/mK or more, preferably 0.60 W or more, or more preferably 0.80 W/mK or more (usually, 20 W/mK or less). When the thermal conductivity of the flame-retardant thermally-conductive pressure-sensitive adhesive sheet is less than 0.30 W/mK, there may be a case where the thermal conductive properties are small, so that the function thereof as the thermally conductive sheet cannot be sufficiently developed.

In the present invention, desirably, the thermal resistance of the flame-retardant thermally-conductive pressure-sensitive adhesive sheet is 12 cm$^2$K/W or less, or preferably 10 cm$^2$K/W or less (usually, 2 cm$^2$K/W or more). When the thermal resistance of the flame-retardant thermally-conductive pressure-sensitive adhesive sheet is above 12 cm$^2$K/W or less, the function thereof as the thermally conductive sheet may not be capable of being sufficiently developed.

In the present invention, desirably, the adhesive force (180°C peel, the tensile rate of 300 mm/min) of the flame-retardant thermally-conductive pressure-sensitive adhesive sheet with respect to a SUS304 steel plate is, 3 N/20 mm or more, preferably 4.0 N/20 mm or more, or more preferably 5.0 N/20 mm or more (usually, 100 N/20 mm or less). When the adhesive force of the flame-retardant thermally-conductive pressure-sensitive adhesive sheet is 3 N/20 mm or more, the adhesiveness to the adherend is sufficient; the adaptability at a contact interfacial surface is excellent; and the contact thermal resistance is suppressed, so that the thermally conductive properties are improved. The flame-retardant thermally-conductive pressure-sensitive adhesive sheet can be bonded to a heat sink, a circuit board, or the like to be allowed to temporarily adhere thereto. On the other hand, when the adhesive force is above 100 N/20 mm, there may be a case where re-bonding (reworkability) in the case of an error in bonding (misalignment) or peeling (repairability) of a thermally conductive member from an adherend at the time of discarding a used product becomes difficult.

In the present invention, when the flame-retardant thermally-conductive pressure-sensitive adhesive sheet is in a form of including the flame-retardant thermally-conductive pressure-sensitive adhesive layer on one surface of the substrate (that is, a case corresponding to  FIG. 1 (b)), the flame-retardant thermally-conductive pressure-sensitive adhesive sheet is used as it is in the measurement of the adhesive force. When the flame-retardant thermally-conductive pressure-sensitive adhesive sheet is in a form of including the flame-retardant thermally-conductive pressure-sensitive adhesive layer only (that is, a case corresponding to FIG. 1 (a)) or in a form of including the pressure-sensitive adhesive layers on both surfaces of the substrate (that is, a case corresponding to FIGS. 1 (d) or (c)), a pressure-sensitive adhesive tape ("No. 31B" manufactured by NITTO DENKO CORPORATION) having a PET film with a thickness of 25 $\mu$m as a substrate and having a total thickness of 53 $\mu$m is bonded to the opposite surface of the pressure-sensitive adhesive surface in which the adhesive force is measured and the measurement is performed using it as the substrate.

In the present invention, desirably, a deviation in width in the holding force test (40°C, a load of 300 g, a contact area of 10 mm $\times$ 20 mm) of the flame-retardant thermally-conductive pressure-sensitive adhesive sheet is 1.5 mm or less, preferably 1.2 mm or less, or more preferably 1.0 mm or less. When the deviation in width in the holding force test of the flame-retardant thermally-conductive pressure-sensitive adhesive sheet is 1.5 mm or less, there is an advantage of being capable of obtaining the holding force with the passing of time. On the other hand, when the deviation in width thereof is above 1.5 mm, there is a disadvantage that a fall occurs with the passing of time.

Examples

In the following, the present invention will now be described in more detail by way of Examples and Comparative Examples. However, the present invention is not limited to the following Examples and Comparative Examples.

(Example 1)

After 0.05 parts by weight of trade name: "IRGACURE-651" (manufactured by BASF Japan Ltd.) and 0.05 parts by weight of trade name: "IRGACURE-184" (manufactured by BASF Japan Ltd.), as photopolymerization initiators, were blended into a monomer mixture in which 82 parts by weight of a 2-ethylhexyl acrylate and 12 parts by weight of a 2-methoxyethyl acrylate, as monomer components, and 5 parts by weight of N-vinyl-2-pyrrolidone (NVP) and 1 part by weight of hydroxyethyl acrylamide (HEAA), as polar group-containing monomers, were  mixed, an ultraviolet ray was applied to the obtained mixture until the viscosity (a BH viscometer, a No. 5 rotor, 10 rpm, a measurement temperature of 30°C) thereof reached about 20 Pa·s, so that a composition (a syrup) in which a part of the components was polymerized was fabricated.

0.05 parts by weight of dipentaerythritol hexaacrylate of trade name: "KAYARAD DPHA-40H" (manufactured by NIPPON KAYAKU Co., Ltd.) as a polyfunctional monomer and 1 part by weight of trade name: "PLYSURF A212E" (manufactured by DAI-ICHI KOGYO SEIYAKU CO., LTD.) as a dispersant were added to 100 parts by weight of the syrup. In addition, as a hydrated metal compound, 175 parts by weight of trade name: "HIGILITE H-32" (shape: a pulverized shape, particle size: 8 $\mu$m) (manufactured by SHOWA DENKO K.K.), which was aluminum hydroxide powders, and as a hydrated metal compound, 175 parts by weight of trade name: "HIGILITE H-10" (shape: a pulverized shape, particle size: 55 $\mu$m) (manufactured by SHOWA DENKO K.K.), which was aluminum hydroxide powders, were added to the obtained mixture, so that a precursor composition was fabricated.

The precursor composition was applied between release treated surfaces of two pieces of polyethylene terephthalate substrates, each of which had one surface subjected to release treatment, of trade name: "DIAFOIL MRF38" (manufactured by Mitsubishi Polyester Film GmbH) so that the thickness thereof after being dried and cured was 1000 $\mu$m. That is, the precursor composition was sandwiched between the two pieces of polyethylene terephthalate substrates. Then, the ultraviolet ray at an illuminance of about 5 mW/cm$^2$ was applied to the obtained product from both sides thereof for 3 minutes, so that the monomer component was polymerized to serve as an acrylic polymer and in this way, a flame-retardant thermally-conductive pressure-sensitive adhesive sheet was fabricated. The acrylic polymer had a glass transition temperature of -62.8°C.

(Example 2)

A flame-retardant thermally-conductive pressure-sensitive adhesive sheet was fabricated in the same manner as in Example 1, except that 82 parts by weight of a 2-ethylhexyl acrylate and 12 parts by weight of a 2-methoxyethyl acrylate, as monomer components, and 5 parts by weight of N-vinyl-2-pyrrolidone (NVP) and 1 part by weight of hydroxyethyl acrylamide (HEAA), as polar group-containing monomers in Example 1 were changed to 80 parts by weight of a 2-ethylhexyl acrylate and 12 parts by weight of a 2-methoxyethyl acrylate, and 7 parts by weight  of N-vinyl-2-pyrrolidone (NVP) and 1 part by weight of hydroxyethyl acrylamide (HEAA), as polar group-containing monomers, respectively. The acrylic polymer had a glass transition temperature of -61.1 °C.

(Example 3)

A flame-retardant thermally-conductive pressure-sensitive adhesive sheet was fabricated in the same manner as in Example 1, except that 82 parts by weight of a 2-ethylhexyl acrylate and 12 parts by weight of a 2-methoxyethyl acrylate, as monomer components, and 5 parts by weight of N-vinyl-2-pyrrolidone (NVP) and 1 part by weight of hydroxyethyl acrylamide (HEAA), as polar group-containing monomers in Example 1 were changed to 77 parts by weight of a 2-ethylhexyl acrylate and 11 parts by weight of a 2-methoxyethyl acrylate, and 11 parts by weight of N-vinyl-2-pyrrolidone (NVP) and 1 part by weight of hydroxyethyl acrylamide (HEAA), as polar group-containing monomers, respectively. The acrylic polymer had a glass transition temperature of -58.0°C.

(Example 4)

A flame-retardant thermally-conductive pressure-sensitive adhesive sheet was fabricated in the same manner as in Example 1, except that 82 parts by weight of a 2-ethylhexyl acrylate and 12 parts by weight of a 2-methoxyethyl acrylate, as monomer components, and 5 parts by weight of N-vinyl-2-pyrrolidone (NVP) and 1 part by weight of hydroxyethyl acrylamide (HEAA), as polar group-containing monomers in Example 1 were changed to 69 parts by weight of a 2-ethylhexyl acrylate and 10 parts by weight of a 2-methoxyethyl acrylate, and 20 parts by weight of N-vinyl-2-pyrrolidone (NVP) and 1 part by weight of hydroxyethyl acrylamide (HEAA), as polar group-containing monomers, respectively. The acrylic polymer had a glass transition temperature of -50.1 °C.

(Example 5)

After 100 parts by weight of a 2-ethylhexyl acrylate, as a monomer component, and 0.05 parts by weight of trade name: "IRGACURE-651" (manufactured by BASF Japan Ltd.) and 0.05 parts by weight of trade name: "IRGACURE-184" (manufactured by BASF Japan Ltd.), as photopolymerization initiators, were blended, an ultraviolet ray was applied to the obtained mixture until the viscosity (a BH viscometer, a No. 5 rotor, 10 rpm, a measurement temperature of 30°C) thereof reached about 20 Pa·s, so that a composition (a syrup) in which a part of the components was polymerized was fabricated.
10 parts by weight of acryloylmorpholine (ACMO) as a polar group-containing monomer, 0.05 parts by weight of dipentaerythritol hexaacrylate of trade name: "KAYARAD DPHA-40H" (manufactured by NIPPON KAYAKU Co., Ltd.) as a polyfunctional monomer, and 1 part by weight of trade name: "PLYSURF A212E" (manufactured by DAI-ICHI KOGYO SEIYAKU CO., LTD.) as a dispersant were added to 90 parts by weight of the syrup. In addition, as a hydrated metal compound, 175 parts by weight of trade name: "HIGILITE H-32" (shape: a pulverized shape, particle size: 8 $\mu$m) (manufactured by SHOWA DENKO K.K.), which was aluminum hydroxide powders, and as a hydrated metal compound, 175 parts by weight of trade name: "HIGILITE H-10" (shape: a pulverized shape, particle size: 55 $\mu$m) (manufactured by SHOWA DENKO K.K.), which was aluminum hydroxide powders, were added to the obtained mixture, so that a precursor composition was fabricated.
Besides the above-described description, a flame-retardant thermally-conductive pressure-sensitive adhesive sheet was fabricated in the same manner as in Example 1. The acrylic polymer had a glass transition temperature of -59.0°C.

(Example 6)

A flame-retardant thermally-conductive pressure-sensitive adhesive sheet was fabricated in the same manner as in Example 5, except that 10 parts by weight of acryloylmorpholine (ACMO) as a polar group-containing monomer in Example 5 was changed to 10 parts by weight of diethylacrylamide (DEAA). The acrylic polymer had a glass transition temperature of -61.0°C.

(Example 7)

A flame-retardant thermally-conductive pressure-sensitive adhesive sheet was fabricated in the same manner as in Example 5, except that 10 parts by weight of acryloylmorpholine (ACMO) as a polar group-containing monomer in Example 5 was changed to 10 parts by weight of a 2-hydroxyethyl acrylate (HEA). The acrylic polymer had a glass transition temperature of -65.6°C.

(Example 8)

A flame-retardant thermally-conductive pressure-sensitive adhesive sheet was fabricated in the same manner as in Example 5, except that 10 parts by weight of acryloylmorpholine (ACMO) as a polar group-containing monomer in Example 5 was changed to 10 parts by weight of a 4-hydroxybutyl acrylate (4HBA). The acrylic polymer had a glass transition temperature of -66.7°C.

(Example 9)

After 0.05 parts by weight of trade name: "IRGACURE-651" (manufactured by BASF Japan Ltd.) and 0.05 parts by weight of trade name: "IRGACURE-184" (manufactured by BASF Japan Ltd.), as photopolymerization initiators, were blended into a monomer mixture in which 80 parts by weight of a 2-ethylhexyl acrylate and 12 parts by weight of a 2-methoxyethyl acrylate, as monomer components, and 7 parts by weight of N-vinyl-2-pyrrolidone (NVP) and 1 part by weight of hydroxyethyl acrylamide (HEAA), as polar group-containing monomers, were mixed, an ultraviolet ray was applied to the obtained mixture until the viscosity (a BH viscometer, a No. 5 rotor, 10 rpm, a measurement temperature of 30°C) thereof reached about 20 Pa·s, so that a composition (a syrup) in which a part of the components was polymerized was fabricated.
20 parts by weight of an acrylic oligomer (a weight average molecular weight of 4300, a glass transition temperature of 95°C) prepared from cyclohexyl methacrylate/isobutyl methacrylate = 60/40 (ratio by weight), 0.08 parts by weight of a 2-isocyanatoethyl acrylate of trade name: "Karenz A01" (manufactured by SHOWA DENKO K.K.), and 1 part by weight of trade name: "PLYSURF A212E" (manufactured by DAI-ICHI KOGYO SEIYAKU CO., LTD.) as a dispersant were added to 80 parts by weight of the syrup. In addition, as a hydrated metal compound, 175 parts by weight of trade name: "HIGILITE H-32" (shape: a pulverized shape, particle size: 8 μm) (manufactured by SHOWA DENKO K.K.), which was aluminum hydroxide powders, and as a hydrated metal compound, 175 parts by weight of trade name: "HIGILITE H-10" (shape: a pulverized shape, particle size: 55 μm) (manufactured by SHOWA DENKO K.K.), which was aluminum hydroxide powders, were added to the obtained mixture, so that a precursor composition was fabricated.
Besides the above-described description, a flame-retardant thermally-conductive pressure-sensitive adhesive sheet was fabricated in the same manner as in Example 1. The acrylic polymer had a glass transition temperature of -62.8°C.

(Example 10)

After 0.05 parts by weight of trade name: "IRGACURE-651" (manufactured by BASF Japan Ltd.) and 0.05 parts by weight of trade name: "IRGACURE-184" (manufactured by BASF Japan Ltd.), as photopolymerization initiators, were blended into a monomer mixture in which 80 parts by weight of a 2-ethylhexyl acrylate and 12 parts by weight of a 2-methoxyethyl acrylate, as monomer components, and 7 parts by weight of N-vinyl-2-pyrrolidone (NVP) and 1 part by weight of hydroxyethyl acrylamide (HEAA), as polar group-containing monomers, were mixed, an ultraviolet ray was applied to the obtained mixture until the viscosity (a BH viscometer, a No. 5 rotor, 10 rpm, a measurement temperature of 30°C) thereof reached about 20 Pa·s, so that a composition (a syrup) in which a part of the components was polymerized was fabricated.
0.05 parts by weight of dipentaerythritol hexaacrylate of trade name: "KAYARAD DPHA-40H" (manufactured by NIPPON KAYAKU Co., Ltd.) as a polyfunctional monomer, 1 part by weight of trade name: "PLYSURF A212E" (manufactured by DAI-ICHI KOGYO SEIYAKU CO., LTD.) as a dispersant, and 1 part by weight of trade name: "SURFLON S-393" (an acrylic copolymer having a polyoxyethylene group and a fluorine-based hydrocarbon group in its side chain, a weight average molecular weight of 8300) (manufactured by AGC SEIMI CHEMICAL CO., LTD.) as a fluorine-based surfactant were added to 100 parts by weight of the syrup. In addition, as a hydrated metal compound, 175 parts by weight of trade name: "HIGILITE H-32" (shape: a pulverized shape, particle size: 8 μm) (manufactured by SHOWA DENKO K.K.), which was aluminum hydroxide powders, and as a hydrated metal compound, 175 parts by weight of trade name: "HIGILITE H-10" (shape: a pulverized shape, particle size: 55 μm) (manufactured by SHOWA DENKO K.K.), which was aluminum hydroxide powders, were added to the obtained mixture, so that a precursor composition was fabricated.

Nitrogen was introduced into the precursor composition to allow bubbles to be mixed therein using a device in which on a disk having a through hole in the center thereof, a stator with many small teeth and a rotor that was opposed to the stator with teeth and had the same small teeth as those of the stator on the disk were provided. The mixing amount of the bubbles was adjusted so as to be about 20 volume % with respect to the total volume of the discharged liquid, so that a bubble-containing precursor composition was obtained.

The bubble-containing precursor composition was applied between release treated surfaces of two pieces of polyethylene terephthalate substrates, each of which had one surface subjected to release treatment, of trade name: "DIAFOIL MRF38" (manufactured by Mitsubishi Polyester Film GmbH) so that the thickness thereof after being dried and cured was 1000 $\mu$m. That is, the bubble-containing precursor composition was sandwiched between the two pieces of polyethylene terephthalate substrates. Then, the ultraviolet ray at an illuminance of about 5 mW/cm$^2$ was applied to the obtained product from both sides thereof for 3 minutes, so that the monomer component was polymerized to serve as an acrylic polymer and in this way, a flame-retardant thermally-conductive pressure-sensitive adhesive sheet was fabricated. The acrylic polymer had a glass transition temperature of -62.8°C.

(Example 11)

A flame-retardant thermally-conductive pressure-sensitive adhesive layer was fabricated in the same manner as in Example 2, except that the application was performed so that the thickness thereof after being cured was 500 $\mu$m.

The obtained flame-retardant thermally-conductive pressure-sensitive adhesive layer was bonded to both surfaces of trade name: "Lumirror S10" (a thickness of 12 $\mu$m) (manufactured by TORAY INDUSTRIES, INC.), which was a polyethylene terephthalate film as a substrate, so that a flame-retardant thermally-conductive pressure-sensitive adhesive sheet having a total thickness of 1012 $\mu$m was fabricated.

(Comparative Example 1)

A flame-retardant thermally-conductive pressure-sensitive adhesive sheet was fabricated in the same manner as in Example 1, except that 82 parts by weight of a 2-ethylhexyl acrylate and 12 parts by weight of a 2-methoxyethyl acrylate, as monomer components, and 5 parts by weight of N-vinyl-2-pyrrolidone (NVP) and 1 part by weight of hydroxyethyl acrylamide (HEAA), as polar group-containing monomers in Example 1 were changed to 100 parts by weight of a 2-ethylhexyl acrylate. The acrylic polymer had a glass transition temperature of -70°C.

(Comparative Example 2)

A flame-retardant thermally-conductive pressure-sensitive adhesive sheet was fabricated in the same manner as in Example 5, except that 10 parts by weight of acryloylmorpholine (ACMO) as a polar group-containing monomer with respect to 90 parts by weight of the syrup in Example 5 was changed to 1 part by weight of an acrylic acid (AA) as a polar group-containing monomer with respect to 99 parts by weight of the syrup. The acrylic polymer had a glass transition temperature of -69.1 °C.

(Comparative Example 3)

A flame-retardant thermally-conductive pressure-sensitive adhesive sheet was fabricated in the same manner as in Example 5, except that 10 parts by weight of acryloylmorpholine (ACMO) as a polar group-containing monomer with respect to 90 parts by weight of the syrup in Example 5 was changed to 3 parts by weight of an acrylic acid (AA) as a polar group-containing monomer with respect to 97 parts by weight of the syrup. The acrylic polymer had a glass transition temperature of -67.1 °C.

(Comparative Example 4)

A flame-retardant thermally-conductive pressure-sensitive adhesive sheet was fabricated in the same manner as in Example 1, except that the mixing amount of the syrup was changed from 100 parts by weight in Example 1 to 95 parts by weight and furthermore, 5 parts by weight of an acrylic acid (AA) was added. The acrylic polymer had a glass transition temperature of -58.0°C.

(Comparative Example 5)

After 0.05 parts by weight of trade name: "IRGACURE-651" (manufactured by BASF Japan Ltd.) and 0.05 parts by weight of trade name: "IRGACURE-184" (manufactured by BASF Japan Ltd.), as photopolymerization initiators, were blended into a monomer mixture in which 95 parts by weight of a 2-ethylhexyl acrylate and 5 parts by weight of an acrylic acid, as monomer components, were mixed, an ultraviolet ray was applied to the obtained mixture until the viscosity (a BH viscometer, a No. 5 rotor, 10 rpm, a measurement temperature of 30°C) thereof reached about 20 Pa·s, so that a composition (a syrup) in which a part of the components was polymerized was fabricated.

0.05 parts by weight of dipentaerythritol hexaacrylate of trade name: "KAYARAD DPHA-40H" (manufactured by NIPPON KAYAKU Co., Ltd.) as a polyfunctional monomer and 1 part by weight of trade name: "PLYSURF A212E" (manufactured by DAI-ICHI KOGYO SEIYAKU CO., LTD.) as a dispersant were added to 100 parts by weight of the syrup. In addition, as a hydrated metal compound, 175 parts by weight of trade name: "HIGILITE H-32" (shape: a pulverized shape, particle size: 8 μm) (manufactured by SHOWA DENKO K.K.), which was aluminum hydroxide powders, and as a hydrated metal compound, 175 parts by weight of trade name: "HIGILITE H-10" (shape: a pulverized shape, particle size: 55 μm) (manufactured by SHOWA DENKO K.K.), which was aluminum hydroxide powders, were added to the obtained mixture, so that a precursor composition was fabricated.

However, the viscosity of the precursor compositiy was radically increased and the fluiditiy thereof was lost, so that the application was not capable of being performed.

(Test Evaluation)

The following tests of the flame-retardant thermally-conductive pressure-sensitive adhesive sheets obtained in Examples and Comparative Examples were performed. The test results are shown in Table 1.

(Thermal Conductivity Thermal Resistance)

The measurement of the thermal resistance was performed using a thermal property evaluation apparatus shown in FIG. 2.

To be specific, each of flame-retardant thermally-conductive pressure-sensitive adhesive sheets S (20 mm × 20 mm) in Examples 1 to 11 and Comparative Examples 1 to 4 was sandwiched between one pair of blocks (may be referred to as rods) L, each of which was made of aluminum (A5052, thermal conductivity: 140 W/m·K) and was formed to be a cube having one side of 20 mm, and the one pair of blocks L were bonded to each other via the adhesive sheet.

Then, the one pair of blocks L were disposed up and down between a heating element (heater block) H and a heat dissipating element (a cooling base board composed so that cooling water circulated inside thereof) C. To be specific, the heating element H was disposed on the upper-side block L and the heat dissipating element C was disposed below the lower-side block L.

At this time, the one pair of blocks L bonded to each other by the flame-retardant thermally-conductive pressure-sensitive adhesive sheet S were positioned between one pair of pressure adjusting screws T that penetrated through the heating element H and the heat dissipating element C. Load cells R were disposed between the pressure adjusting screws T and the heating element H. The structure was made so as to measure a pressure at the time of allowing the pressure adjusting screws T to be tightened and the obtained pressure was used as a pressure applied to the flame-retardant thermally-conductive pressure-sensitive adhesive sheet S.

Three probes P (a diameter of 1 mm), which were a contact displacement meter, were provided so as to penetrate through the lower-side block L and the flame-retardant thermally-conductive pressure-sensitive adhesive sheet S from the side of the heat dissipating element C. At this time, the upper end portions of the probes P were in a state of being in contact with the lower surface of the upper-side block L. The structure was made so as to be capable of measuring a gap between the upper-side block L and the lower-side block L (the thickness of an adhesive sheet S).

Temperature sensors D were put in the heating element H and the upper-side and lower-side blocks L. To be specific, the temperature sensors D were put in one place in the heating element H and were put in five places with intervals of 5 mm in the up-down direction of each of the blocks L.

In the measurement, first, the pressure adjusting screws T were tightened to apply a pressure to the flame-retardant thermally-conductive pressure-sensitive adhesive sheet S and the temperature of the heating element H was set to be 80°C, while cooling water at 20°C was circulated in the heat dissipating element C.

After the temperature of the heating element H and the upper-side and lower-side blocks L was stabilized, the temperature of the upper-side and lower-side blocks L was measured with the temperature sensors D. The heat flux passing through the flame-retardant thermally-conductive pressure-sensitive adhesive sheet S was calculated from the thermal conductivity (W/m·K) and the temperature gradient of the upper-side and lower-side blocks L, and the temperature at the interfacial surfaces of the upper-side and lower-side blocks L with the flame-retardant thermally-conductive pressure-sensitive adhesive sheet S was calculated. Using the obtained values, the thermal conductivity (W/m·K) and the thermal resistance (cm²·K/W) at the pressure were calculated by using the following heat conduction equation (the Fourier's law).

$$Q = -\lambda \text{grad} T$$

$$R = L/\lambda$$

Q: heat flux per unit area
gradT: temperature gradient
L: thickness of sheet
λ: thermal conductivity
R: thermal resistance

At this time, the thermal conductivity and the thermal resistance (described later) at a pressure of 25 N/cm² (250 kPa) applied to the flame-retardant thermally-conductive pressure-sensitive adhesive sheet S were used.

(Adhesive Force)

The release film on one surface of each of the flame-retardant thermally-conductive pressure-sensitive adhesive sheets fabricated in Examples 1 to 11 and Comparative Examples 1 to 4 was peeled off; then, a pressure-sensitive adhesive tape ("No. 31B" manufactured by NITTO DENKO CORPORATION) having a PET film with a thickness of 25 μm as a substrate and having a total thickness of 53 μm was bonded thereto; and the bonded film was cut into pieces each having a width of 20 mm and a length of 150 mm to produce evaluation samples. The remaining release film was peeled from each of the evaluation samples and the resulting sample was bonded to a SUS304 steel plate under an atmosphere of 23°C and 50 %RH by one reciprocation of a 2 kg roller. After the resulting product was allowed to stand at 23°C for 30 minutes, a peel test was performed at a peel angle of 180°C and a tensile rate of 300 mm/min using a universal tensile testing machine "TCM-1kNB" (manufactured by Minebea Co., Ltd.) and the adhesive force was measured.

In Comparative Examples 2 to 4, an interfacial peeling occured.

(Holding Force)

The release film on one surface of each of the flame-retardant thermally-conductive pressure-sensitive adhesive sheets fabricated in Examples 1 to 11 and Comparative Examples 1 to 4 was peeled off and then, a pressure-sensitive adhesive tape ("No. 31B" manufactured by NITTO DENKO CORPORATION) having a PET film with a thickness of 25 μm as a substrate and having a total thickness of 53 μm was bonded thereto. The bonded film was cut into pieces each having a width of 10 mm and a length of 100 mm to be bonded to a phenol resin plate with a contact area of 10 mm × 20 mm. The obtained product was allowed to stand at 40°C for 30 minutes; then, the phenol resin plate was hung down; and a uniform load of 300 g was loaded on a free end of the pressure-sensitive adhesive tape to measure a falling time (min) of the pressure-sensitive adhesive tape at 40°C and an amount of deviation (mm) thereof after 60 minutes.

In Comparative Example 1, the deviation in width was 1 mm, which was large, so that the practical holding properties were not capable of being obtained.

(Flame Retardancy)

Each of the flame-retardant thermally-conductive pressure-sensitive adhesive sheets fabricated in Examples 1 to 11 and Comparative Examples 1 to 4 was cut into pieces each having a size of 12.7 mm × 127 mm and the release films on both surfaces thereof were peeled off to produce five test pieces in each Examples and Comparative Examples. One end of the test piece was vertically held to be suspended. A free end thereof was first subjected to a flame of a burner for 10 seconds; then was released therefrom, and thereafter, was further subjected thereto for 10 seconds. The success or failure in UL94V-0 of each of the obtained sheets was evaluated in accordance with the following evaluation criteria.

(1) The total flame conbustion time (the total of a burning time after being subjected to a first flame and a burning time after being subjected to a second flame) of each of the test pieces is within 10 seconds.

(2) The total of the total flame conbustion time of the five test pieces is within 50 seconds.

(3) The flame combustion time and the flameless combustion time of each of the test pieces after being subjected to the second flame are within 30 seconds.

(4) When a burning drip falls from the test piece, it fails to ignite a cotton that is disposed below.

(5) Suspended portions fail to burn out in all of the test pieces.

Good there are 3 or more evaluation criteria satisfying the above-described (1) to (5)

Bad there are less than 3 evaluation criteria satisfying the above-described (1) to (5).

[Table 1]

Table 1

| | | Ex.1 | Ex.2 | Ex.3 | Ex.4 | Ex.5 | Ex.6 | Ex.7 | Ex.8 |
|---|---|---|---|---|---|---|---|---|---|
| Polar Group-Containing Monomer | Type | NVP/ HEAA | NVP/ HEAA | NVP/ HEAA | NVP/ HEAA | ACMO | DEAA | HEA | 4HBA |
| | Ratio [wt%] (vs Monomer Component) | 5/1 | 7/1 | 11/1 | 20/1 | 10 | 10 | 10 | 10 |
| Thermal Conductivity | [W/m·k] | 1.13 | 1.12 | 1 14 | 1.06 | 1.14 | 1.09 | 1.26 | 1.22 |
| Thermal Resistance | [cm$^2$·K/W) | 67 | 50 | 66 | 65 | 54 | 46 | 70 | 62 |
| Adhesive Force | [N/20mm] | 7.6 | 10.0 | 10.2 | 9.7 | 11.4 | 69 | 6.0 | 120 |
| Holding Force | Deviation in Width [mm] | 03 | 0.2 | 10 | 0.4 | 04 | 09 | 03 | 03 |
| Flame Retardancy | UL94V-0 | Good | Good | Good | Good | Good | Good | Good | Good |

[Table 2]

Table 2

| | | Ex.9 | Ex.10 | Ex.11 | Comp. Ex.1 | Comp. Ex.2 | Comp. Ex.3 | Comp. Ex. 4 | Comp. Ex.5 |
|---|---|---|---|---|---|---|---|---|---|
| Polar Group-Containing Monomer | Type | NVP/ HEAA | NVP/ HEAA | NVP/ HEAA | - | AA | AA | NVP/ HEAA/AA | AA |
| | Ratio [wt%] (vs Monomer Component) | 7/1 | 7/1 | 7/1 | - | 1 | 3 | 4.75/0.9/5 | 5 |
| Thermal Conductivity | [W/m·k] | 1.03 | 0.98 | 1.13 | 1.13 | 1.22 | 1.20 | 1.21 | - |
| Thermal Resistance | [cm$^2$·K/W] | 9.3 | 74 | 8.2 | 5.7 | 8.4 | 72 | 63 | - |
| Adhesive Force | [N/20mm] | 77.0 | 27.0 | 69 | 7.0 | 25(×) | 22(×) | 1.9(×) | - |
| Holding Force | Deviaiton m Width [mm] | 03 | 0.3 | 0.3 | 2.0(×) | 1.3 | 02 | 02 | - |
| Flame Retardancy | UL94V-0 | Good | Good | Good | Good | Good | Good | Good | - |

It is clear that the flame-retardant thermally-conductive pressure-sensitive adhesive sheets in Examples 1 to 11 are a flame-retardant thermally-conductive pressure-sensitive adhesive sheet that includes an acrylic polymer, which is prepared by copolymerizing a monomer component containing a polar group-containing monomer that does not substantially contain a carboxyl group-containing monomer, and a hydrated metal compound, have excellent adhesive properties and an excellent holding force, and furthermore, have high flame retardancy (UL94V-0)

On the other hand, m Comparative Example 1, a polar group-containing monomer was not contained in an acrylic polymer as a component, so that the holding force was poor In Comparative Examples 2 to 4, a carboxyl group-containing monomer was contained in an acrylic polymer, so that the adhesive force was poor. In Comparative Example 5, an acrylic acid was contained in a partial polymer of a monomer component, so that when a hydrated metal compound was blended therein, the fluidity was immediately lost and the application was not capable of being performed.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

Industrial Applicability

The flame-retardant thermally-conductive pressure-sensitive adhesive sheet of the present invention is used for a hard disk, an LED lighting, a lithium ion battery, or the like.

**Claims**

1. A flame-retardant thermally-conductive pressure-sensitive adhesive sheet comprising:

   a flame-retardant thermally-conductive pressure-sensitive adhesive layer containing at least: (a) an acrylic polymer prepared by copolymerizing a monomer component containing an alkyl (meth)acrylate as a main component, containing a polar group-containing monomer, and not substantially containing a carboxyl group-containing monomer and (b) a hydrated metal compound.

2. The flame-retardant thermally-conductive pressure-sensitive adhesive sheet according to claim 1, wherein the flame-retardant thermally-conductive pressure-sensitive adhesive layer contains 100 parts by weight of the (a) an acrylic polymer and 100 to 500 parts by weight of the (b) a hydrated metal compound.

3. The flame-retardant thermally-conductive pressure-sensitive adhesive sheet according to claim 1, wherein the (a) an acrylic polymer contains, as a polar group-containing monomer, a nitrogen-containing monomer and/or a hydroxyl group-containing monomer as a component.

4. The flame-retardant thermally-conductive pressure-sensitive adhesive sheet according to claim 1, wherein in the (b) a hydrated metal compound, a particle having a first average particle size of 10 $\mu$m or more and a particle having a first average particle size of less than 10 $\mu$m are contained at a ratio of 1:10 to 10:1 (ratio by weight).

5. The flame-retardant thermally-conductive pressure-sensitive adhesive sheet according to claim 1, wherein the flame-retardant thermally-conductive pressure-sensitive adhesive layer further contains (c) bubbles.

6. The flame-retardant thermally-conductive pressure-sensitive adhesive sheet according to claim 5, wherein the content of the (c) bubbles with respect to the flame-retardant thermally-conductive pressure-sensitive adhesive layer is 5 to 50 volume %.

7. The flame-retardant thermally-conductive pressure-sensitive adhesive sheet according to claim 1, wherein the flame-retardant thermally-conductive pressure-sensitive adhesive sheet includes a substrate and the flame-retardant thermally-conductive pressure-sensitive adhesive layer that is provided on at least one surface of the substrate.

8. The flame-retardant thermally-conductive pressure-sensitive adhesive sheet according to claim 1, wherein the thermal conductivity is 0.30 W/mK or more.

9. The flame-retardant thermally-conductive pressure-sensitive adhesive sheet according to claim 1, wherein the adhesive force (a peeling angle of 180°C, a tensile rate of 300 mm/min) with respect to a SUS304 steel plate is

3 N/20 mm or more.

FIG. 1

(a)

(b)

(c)

(d)

FIG. 2

| **INTERNATIONAL SEARCH REPORT** | International application No. |
|---|---|
| | PCT/JP2012/052049 |

A.  CLASSIFICATION OF SUBJECT MATTER
*C09J7/00*(2006.01)i, *C09J7/02*(2006.01)i, *C09J11/04*(2006.01)i, *C09J133/04*(2006.01)i

According to International Patent Classification (IPC) or to both national classification and IPC

B.  FIELDS SEARCHED

Minimum documentation searched (classification system followed by classification symbols)
C09J1/00-201/10

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2005-54006 A  (3M Innovative Properties Co.),<br>03 March 2005 (03.03.2005),<br>paragraphs [0020], [0036], [0039], [0047], [0048]; table 1<br>& US 2007/0059521 A1    & WO 2005/017060 A1<br>& KR 10-2006-0064050 A   & CN 1833012 A | 1-3,5-9<br>4 |
| Y | JP 2004-27039 A  (Dainippon Ink and Chemicals, Inc.),<br>29 January 2004 (29.01.2004),<br>claims; paragraphs [0006], [0031]<br>(Family: none) | 4 |

| [X]  Further documents are listed in the continuation of Box C. | [ ]  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 April, 2012 (10.04.12) | 24 April, 2012 (24.04.12) |

| Name and mailing address of the ISA/<br>Japanese Patent Office | Authorized officer |
|---|---|
| | |
| Facsimile No. | Telephone No. |

Form PCT/ISA/210 (second sheet) (July 2009)

**INTERNATIONAL SEARCH REPORT**

International application No.

PCT/JP2012/052049

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-513216 A  (LG Chem, Ltd.),<br>24 May 2007 (24.05.2007),<br>claims; paragraph [0053]<br>& EP 1685208 A        & WO 2005/047412 A2<br>& KR 10-2005-0046564 A   & CN 1867644 A | 1-9 |
| A | JP 2004-307748 A  (Sliontec Corp.),<br>04 November 2004 (04.11.2004),<br>claims<br>(Family: none) | 1-9 |
| A | JP 11-269438 A  (Dainippon Ink and Chemicals,<br>Inc.),<br>05 October 1999 (05.10.1999),<br>claims<br>(Family: none) | 1-9 |

Form PCT/ISA/210 (continuation of second sheet) (July 2009)

## REFERENCES CITED IN THE DESCRIPTION

### Patent documents cited in the description

- JP 2010174173 A
- JP H11269438 B
- JP 2002294192 A